# EUROPEAN PATENT SPECIFICATION

(11) **EP 1 389 163 B1**
(45) Date of publication and mention of the grant of the patent: **13.08.2008**
(21) Application number: 01986475.0
(22) Date of filing: 16.11.2001
(51) Int. Cl.: B41M 3/12, B41M 5/025, G11B 23/40

(54) **SHEET STRUCTURE AND METHOD FOR ADHESIVE IMAGE TRANSFER**
FLÄCHENGEBILDEKONSTRUKTION UND VERFAHREN ZUM TRANSFER VON HAFTBILDERN
DISPOSITIF ET PROCEDE DE TRANSFERT D'IMAGES ADHESIVES

(30) Priority: 16.11.2000 US 252174 P
(43) Date of publication of application: 18.02.2004
(73) Proprietor: AVERY DENNISON CORPORATION, Pasadena, CA 91103 (US)
(72) Inventor: LEE, Ivan Sou Phong, Pasadena, CA 91103 (US); TATARYAN, Anahit, Pasadena, CA 91103 (US); UGOLICK, Ronald, Pasadena, CA 91103 (US)
(74) Representative: Fenlon, Christine Lesley
(86) International application number: PCT/US2001/043845
(87) International publication number: WO 2003/078173

(56) References cited:
- EP-A- 0 628 956
- WO-A-99/56682
- US-A- 5 851 614

## Description

### RELATED APPLICATIONS

This application claims priority of U.S. Provisional Application Serial No. 60/252,174 entitled "Structure and Method for Adhesive Image Transfer," filed November 16, 2000.

### BACKGROUND OF THE INVENTION

General Background and State of the Art: There are a wide variety of applications for labels, such as labeling files, folders, and various storage media (e.g. compact discs and floppy discs), as well as other items, including personal effects. Manufacturers also use labels to label bottles, jars, boxes and the like. Other various packaging, shipping and storage containers require some sort of labeling for identification purposes. A label is typically imprinted with alpha-numeric characters and/or graphics.

Standard label assemblies include a release liner that is coated with a release layer such as silicone. The release liner is removably adhered to a die-cut face stock label that is coated with a pressure-sensitive adhesive. The facestock is typically paper but can alternatively be coated plastic, metallic film, or any of a variety of sheet materials known in the art. In use, one removes the label from the release liner, such as an envelope, packaging or other surface to be labeled, and then applies the label to the substrate that is to be labeled.

Methods have recently been developed that do not require the use of the facestock component that is usually found in label constructions. Instead, text and/or graphics are transferred directly onto a substrate by using ink-receptive, activatable polymers that hold the printed image and that are directly transferred onto a substrate. This "label-less" approach to image transfer prints the image into the activatable, ink-receptive polymer rather than onto a facestock that is coated with adhesive.

U.S. Patent Nos. 5,969,069 and 6,124,417 to Su et al., which are both incorporated by reference herein, disclose some water-activatable acrylic compositions and various constructions for transferring images onto substrates. Each of the constructions generally includes a polymer layer upon which an ink jet printer prints with water-based ink. The polymer layer becomes tacky within the regions of a wetted printed image, for example, but not in the non-printed regions. While the adhesive is still wet from printing, the adhesive is applied to a substrate and the backing or liner layer is removed.

U.S. Patent No. 6,277,229 discloses various sheet constructions for transferring images using an ink-receptive adhesive. Some of the adhesives are activatable to a tacky state when imprinted with a water-based ink, such as that from an ink jet printer. The image should be transferred shortly after printing, while the adhesive is still sufficiently hydrated by the inks so that the adhesive is tacky.

The uses to be found for image transfer sheets that do not require a face stock are practically unlimited. One of the many applications is for labeling optical media discs. Optical media discs are sold by the billions every year. Most optical media discs are labeled in some way. Commercially produced optical media discs, such as music CDs sold by major recording companies or DVDs and/or other optical disc media, are mass produced with labeling printed directly on the upper surface of the optical media disc.

There are many optical media discs, however, that are produced in small batches or even individually, for which it is not economical to print with commercial CD labeling equipment. For example, a school child might compile a compact disc containing a variety of graphics and other information from the World Wide Web about a particular topic for a school report. An aspiring musician might compile a CD with a collection of songs that she has composed. A secretary might compile a CD with a year's worth of documents that he has typed, for archiving purposes. In all these situations, it is desirable to have a system for easily preparing a label for a CD. It is preferable to prepare the label using standard home or office personal computing equipment, such as a personal computer and a standard home/office printer. One common type of home/office printer is an ink jet printer.

There are home/office disc labeling kits that are commercially available. One example is illustrated in Avery Dennison's U.S. Patent No. 5,715,934, which is entitled "CD-ROM Label With Positioning Means," and which issued on February 10, 1998. The label of the '934 patent is provided as a blank sheet of paper stock that is coated on the back side with a pressure sensitive adhesive. The adhesive-coated paper sheet is mounted to a standard release liner that is coated with silicone or another release coating as known in the adhesive arts. After printing, the user removes the release liner and adheres the printed paper sheet onto the compact disc.

This approach to custom labeling optical media discs has proven very popular and commercially successful. However, the paper-based label is not always as aesthetically pleasing as a disc that has been printed upon commercially. Additionally, the overall success of the application relies in part on the skill of the particular person applying the label. Air bubbles may become trapped between the upper face of the CD and the label when the label is pressed down upon the disc, resulting in an unaesthetic, bumpy label appearance.

Also, a facestock made of paper, for example, also adds thickness to the disc. The additional thickness of the label can cause jamming in certain types of CD-ROM drives, for example.

### INVENTION SUMMARY

The present invention generally relates to a convenient and aesthetically pleasing way to label compact discs, digital video discs, and a wide variety of other products and objects. The invention includes both a novel and beneficial adhesive image transfer sheet assembly and a method for labeling a surafce, for example, using standard computer equipment typically found in a home or office, such as an ink jet printer. The present invention may be extended beyond the home or office, and used in a commercial printing and/or labeling setting.

One aspect of the invention relates to an adhesive image transfer sheet assembly comprising at least one ink-absorbing image holding layer and a backing layer. The ink-absorbing image holding layer is activatable to a tacky state by the application of light pressure or heat produced by means of rubbing the backing layer. The assembly is adapted to receive printing from a printer, such as an ink jet printer, or from other writing devices such as an ink pen.

In one embodiment, the ink-absorbing image holding layer is a clear, glossy acrylic emulsion-based polymer film. The film is a co-polymer of HEMA, N-VP, acrylic acid, quaternary amine and other acrylic monomers. A function of the ink-absorbing image holding layer is to absorb and fix aqueous dye and pigment-based inks. The coating can be pigmented to enhance the opacity and/or tint the film.

Various printers may be used to print the image transfer sheets including, but not limited to standard home/office ink jet printers and wide-format ink jet printers. Wide-format printers, such as wide format ink jet printers, are known in the art and are available commercially from Hewlett-Packard Corporation of Palo-Alto, California.
Additional printing methods include flexographic printing, brushing, spraying dipping and coating, for example. The adhesive image transfer sheet may also be pre-cut or perforated to a particular shape, so as to correspond to the shape of a disc, for instance.

Furthermore, provisions for air egress are made in certain embodiments of the present invention. For example, a pattern or textured surface may be formed on the ink-absorbing image-holding layer to provide an escape route for air that is trapped between the ink-absorbing image-holding layer and the surface that is being labeled.
The "escape routes" allow air to escape from underneath the ink-absorbing image-holding layer so that bubbles do not form on the transferred image-holding layer.
Alternatively, non-adhesive material may be embedded into the ink-receptive adhesive layer to provide routes for air egress.

In addition to the ink-absorbing image-holding layer, other layers, such as one or more water resistant layers, may form part of the adhesive image transfer sheet assembly. For example, a water-resistant layer may be provided in between the image-receptive layer and a backing sheet, which may optionally be release-coated with silicone or another release coating known in the art. One embodiment of a water-resistant layer is a clear, glossy polymer film, comprised of a blend of polyacrylic based emulsion, nitrile rubber emulsion and polyethylene based emulsion. The water-resistant layer provides a protective film over the image. Other embodiments of a water-resistant layer may be tinted to provide the image with a tinted or pigmented appearance when viewed through the water-resistant layer.

Another aspect of the invention relates to a method of labeling a disc using an adhesive image transfer sheet assembly. After receiving an image printed with ink, the ink-absorbing image holding layer is allowed to dry. The image-holding layer is then placed against the upper surface of the disc, and the user lightly rubs the backing sheet. The light rubbing may activate the ink-absorbing image holding layer to a tacky state, causing the ink-absorbing image holding layer to adhere to the disc. The user can then pull away the backing (or liner) layer, which may be release-coated for easily separating the backing from the ink-absorbing image holding layer. An additional water-resistant layer may be provided on the assembly, in between the ink-absorbing image holding layer and the backing layer, to provide a protective layer over the image after the image has been transferred to the disc. Additional layers may also be provided as part of the adhesive image transfer sheet assembly which provide water resistance to the transferred image. Formulations and the positions of such layers are further detailed below.

Various embodiments of the present invention may have particular advantages.
For example, certain embodiments of the present invention are well suited to low-thickness labeling, in which there is no facestock that is transferred onto the object, thereby reducing the thickness of the image. Cost-of-Production savings may result from eliminating the facestock that is used in typical labels.

There are also aesthetic advantages to embodiments of the present invention.
With a label having a facestock that transfers onto the object, the facestock is visible even in areas where there is no printing. In contrast, embodiments of the present invention may be clear in areas where there is no printing, which typically has more aesthetic appeal than unprinted facestock.

These and other features are examples of particular embodiments of the invention, but the invention also includes various other features and embodiments, as will become apparent from the following Detailed Description, the Claims, and the

### Drawings.

### BRIEF DESCRIPTION OF THE DRAWINGS

Fig. 1 is a cross-sectional view of one embodiment of an image transfer sheet;

Fig. 2 illustrates one example of a process for printing an image on an image transfer sheet and then applying the image to a window;

Fig. 3 illustrates one example of a process for printing an image on an image transfer sheet and then applying the image to a bottle as a label;

Fig. 4 is one embodiment of an image transfer sheet that is adapted for labeling a compact disc;

Fig. 5 is an alternative embodiment of an image transfer sheet after indicia and/or graphics has been printed onto the sheet;

Fig. 6 is a detail view of a tab of the sheet of Fig. 5;

Fig. 7 illustrates a generally circular portion of the image transfer sheet with handling tabs, all having been removed from the backing sheet and ready to be mounted in an image transfer apparatus or directly applied to a surface of a compact disc;

Fig. 8 illustrates a compact disc image transfer apparatus with the image transfer sheet of Fig. 7 mounted thereon;

Fig. 9 illustrates the compact disc labeling apparatus of Fig. 9 with a compact disc being mounted thereon for labeling by image transfer;

Fig. 10 is a cross-section taken about Line 10-10 of Fig. 9 when the compact disc has been fully depressed to effect the image transfer onto the compact disc; and

Fig. 11 is a bottom view of the compact disc image transfer apparatus in the configuration of Fig. 10.

### DETAILED DESCRIPTION OF THE PREFERRED EMBODIMENTS

The present invention relates to transferring an image onto any of a wide variety of substrates and image transfer sheet assemblies for doing so. In general, the image transfer happens by first imprinting an image into an ink-receptive polymer and then transferring the polymer to a surface of a substrate. Particular embodiments of the present invention may transfer images to various objects and surfaces that are commonly found in offices and households. Embodiments of the image transfer sheets can image, customize and/or personalize objects that cannot normally be printed with a standard home or office ink jet printer.

For example, in an office or school setting, the present invention includes embodiments for transferring text and/or graphics to tabs and dividers, sheet protectors, binders, report covers, name tags, signs, lunch boxes, presentation boards, props, bulletin boards, chalk/dry erase boards, and displays, among many other things. In a home setting, the present invention provides embodiments for transferring printed text and/or images to mirrors and windows, walls, tiles, refrigerators, file cabinets, files, computer screens, cards, boxes, envelopes and numerous other surfaces.

Many other applications can be imagined. With respect to arts and crafts, a user may transfer an image onto decoupage, photo albums, scrap books, needle point, ornaments, glasswork, tiles, coasters, mat placements, wall hangings, T-shirts, fabric designs, banners, ties, calendars, pillowcases, and aprons. With respect to room décor, images may be transferred onto mirrors, windows, walls, tiles, doors, refrigerators, file cabinets, and computer screens. For gifts and special occasions, image transfer may be used to customize gift wrap, gift boxes, gift bags, cards, envelopes, candles, balloons, magnets, frames, banners, table clothes, party favors, party decorations, over-sized cards and over-sized envelopes, and jars. Examples of using image transfer for identification include labeling optical media discs, tabs, dividers, sheet protectors, binders, report covers, name tags, lunch bags, lunch boxes, and signs.

Image transfer sheets of the type described below can also be used in advertising, such as in customizing hats, puzzles, cups, mugs, key chains, pens, sports bottles, mouse pads, candles, and magnets. Image transfer may also be useful in color coding and organizing objects. Numerous other examples may be imagined, and the foregoing list is merely for purposes of illustration, and not of limitation.

The inventors have also discovered that embodiments of the image transfer sheets that this Detailed Description describes have utility even when not first printed with ink. For example, an image transfer sheet may be used to reduce transmission of electromagnetic radiation through a window. It is well-known that a room can become rather hot when sunlight is permitted to stream through a glass window into the room.
This is particularly true in hot and/or sunny climates. Image transfer sheets can be used with or without printing on the sheet to reduce the radiation from the sun or other sources that causes the room to heat up.

For instance, in one method of reducing transmission of electromagnetic radiation through a window, the image transfer sheet is placed against a window, with the image retaining layer against a surface of the window. The image retaining layer is adhered to the window, by placing the sheet against the window and lightly rubbing the backing sheet, so as to generate heat and/or pressure that activates the image holding polymer to a tacky state and the user removes the backing sheet. The window will continue to transmit light, but the image retaining layer reduces the electromagnetic radiation that causes the room to heat up.

The step of adhering the ink-absorbing image holding layer to the window may include wetting the ink-absorbing image holding layer.

The user may first wish to cut the image transfer sheet to fit the window, and will normally do so before wetting the image transfer layer. The user may also print onto the image holding layer before applying it to the window. For example, the user might print a stained glass pattern onto the image retaining layer in order to give the window a stained giass effect.

Image transfer sheets for use as window films may incorporate an additive to the image holding polymer that reduces the surface tackiness of the polymer. This can aid the user in positioning the sheet onto the window by preventing the image holding layer from adhering too firmly to the window until the user has the sheet properly positioned. The reduced surface tackiness also allows the user to smooth out creases and/or air bubbles so that the image retaining layer lays flat on the window. Suitable additives for reducing surface tackiness are discussed below.

The image holding layer may also have a fine pattern on its surface to allow air to egress as the layer is placed against the window surface. Patterns for allowing air to egress from a surface of a film are known in the art.

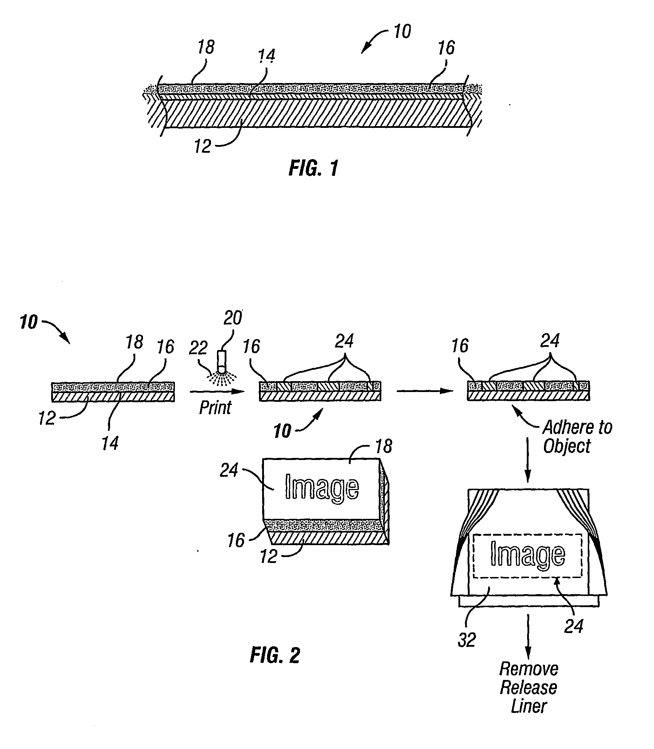

Considering now specific embodiments of an image transfer sheet, Fig. 1 illustrates one embodiment of a sheet for adhesive image transfer. The sheet 10 has a backing sheet 12 with a release coating 14. An ink-absorbing image holding layer 16 (which may alternatively be referred to as an "image holding layer," "ink receptive layer," or the like) provides a printing surface 18. The ink-absorbing image holding layer 16 is typically ink-receptive prior to being printed, particularly with respect to ink found in ink jet printers. Preferably, the image holding layer 16 is receptive to ink commonly found in ink jet printers, such as aqueous and glycol-based ink jet printer inks.

An exemplary image holding layer 16 may include a polymer such as described in detail in U. S. Patent Application Serial No. 556,236, which we incorporate by reference in its entirety, and which was filed on April 24,2000. The Detailed Description of that application is appended hereto as Appendix A. Generally speaking, the polymer is receptive to water-based inks, such as those that are commonly used in ink jet printers. The polymer becomes tacky when exposed to water or heat and/or pressure. The heat required to activate these exemplary polymers may be as low as the heat that is provided by one's fingers (body heat) when the image transfer sheet is applied to a surface and the flexible liner/balcking is rubbed to activate the ink receptive adhesive and adhere the desired image to the surface.

By way of overview, one embodiment of the polymer is an emulsion that is produced as the reaction product of a monomer mixture comprising an alkyl (meth)acrylate, a quaternary amine (meth)acrylate, a hydroxyalkyl (meth)acrylate, an N-vinyl lactam, an ethylenically unsaturated carboxylic acid, and a fluorinated (meth)acrylate. Additionally, a hard monomer and/or an ethoxylated (meth)acrylate monomer may be provided. However, modifications may be made. For example, an excellent image-holding polymer may be formulated as in Example 3 of Appendix A, except that hydroxyethylmethacrylate is replaced with hydroxyethylacrylate at a monomer concentration of 33%, the methylacrylate is reduced to 3.3%, and the methylmethacrylate is omitted and replaced with butyl acrylate.

The polymer emulsion may be produced under vigorous mixing, and preferably in the presence of a plurality of surfactants to further ensure good mixing. In one preferred embodiment, the polymer emulsion is made by a sequential polymerization reaction of two different monomer mixtures. For such a sequential polymerization reaction, the first monomer mixture is allowed to partially react before the second monomer mixture is added to the reactor. Improved properties for the resulting polymer coating result when the second monomer mixture has a lower amount of ethylenically unsaturated carboxylic acid than the first monomer mixture. In particular, when such a sequential polymerization reaction is used, the resulting polymer emulsion has a lower viscosity at higher solids concentration than would otherwise be achieved if a single monomer mixture were reacted. By having a lower viscosity at a higher solids content, the polymer emulsion is far easier to handle. U.S. Patent Application Serial No. 556,236 and Appendix A hereto describe the various formulation of the polymer in greater detail.

The polymer may be combined with other components, to provide favorable physical properties. For example, Synthomer S-6000 is a nitrile rubber co-polymer that is available from Synthomer GmbH that may provide the polymer with flexibility. In one alternative embodiment of the present invention, 94.028 parts by weight on a dry basis of a polymer according to U. S. Patent Application Serial No. 556,236 is combined with 5.972 parts by weight on a dry basis of Synthomer 6000 to form the ink absorbing layer. Numerous other variations fall within the scope of the invention.

Another embodiment of a suitable polymer is formed by combining a polymer as described in U. S. Patent Application Serial No. 556,236 with a repulpable, pressure sensitive adhesive. One exemplary and suitable embodiment of such a repulpable, pressure sensitive adhesive is described in International Application Number PCT/US98/21174, which was published on 22 April 1999 as W099/19415 and is herein incorporated by reference in its entirety. For example, a suitable polymer may be formed by combining 66.19 parts by weight on a dry basis of a polymer according to the disclosure of U. S. Patent Application Serial No.. 556,236, with 33.801 parts by weight on a dry basis of an adhesive according to the disclosure of W099/19415, for a total of 100 parts by weight on a dry basis.

The ink-absorbing image holding layer 16 may include a cross-linker to provide certain desirable characteristics. For example, a polymer as described in Appendix A may be combined with a cross-linker. The cross-linker may serve to reduce the tackiness of the image holding layer 16 until the layer 16 is activated with heat and/or pressure to a more tacky state, or is activated by the liquid ink itself. This feature permits the user to position and reposition the image transfer sheet on a substrate prior to fixing the image in place on the substrate. The user is also able to gradually apply the image holding layer 16 to a substrate while smoothing out air bubbles and/or wrinkles in the layer 16 as it is being applied. The reduced tackiness also facilitates reel-to-reel processing of webs that are coated with the image holding polymer, without the surface of the polymer getting stuck to the underside of the immediately-adjacent backing sheet on the roll.

The cross-linker may be, for example, a quaternary amine type of polymer. Additionally, it is believed that a polymer base identified as SRI 13796 from Cyance Corporation of Menlo Park, California (currently providing company information on the Internet at http:/www.cyance.com, and which is related to SRI International, also of Menlo Park, California), acts as a cross-linker when added to the image-holding polymer. In particular, the inventors have discovered that the surface tackiness of the image-holding polymer is reduced when the polymer base is added. The reduction in surface tackiness improves applicability of the image-holding layer to substrates, in that image-holding layer is less likely to crease or bubble as it is being adhered to the substrate. The user is also better able to reposition the image transfer sheet on the substrate, without the image-holding layer prematurely bonding to the substrate. The sheet is also better suited for smoothing out air bubbles and creases during application.

Chance Corporation holds rights to a number of patents, including U. S. Patent Numbers 6,291,023 and 6,241,787, both of which are incorporated by reference herein.

For image transfer, the cross-linker is typically provided at between 0.5% and 1.0% on a dry weight basis. For special applications in which the image is not to be transferred, but where image quality is paramount, the amount of cross-linker may be increased to, for example, between approximately 2.5% and 10.0% on a dry weight basis.

Fig. 2 illustrates steps in a process of printing an adhesive image transfer sheet 10 and an ink jet printer, and applying the printed image to the surface of a window. The sheet 10 is fed into an ink jet printer 20, which prints ink jet ink 22 onto the sheet 10. The ink jet ink 22 is typically an aqueous ink, although it may alternatively be a glycol-based ink or other type of ink jet printer ink commonly used by manufacturers of ink jet printers. The ink jet printer 20 prints an image 24 onto the sheet 10. The image 24 may include text and/or graphics, such as text messages, photographs, drawings, and the like.

After the image is printed upon the sheet 10, the sheet is typically allowed to dry for at least several minutes. The user then presses the surface of the sheet 18 against the surface of the window 32. The user activates the image holding layer 16 to a tacky state by lightly rubbing on the backing sheet 12, thereby generating pressure and heat. Light rubbing may also be helpful in removing air bubbles or creases. Once the image holding layer adheres to the substrate and any undesired bubbles or creases are eliminated, the user removes the backing sheet.

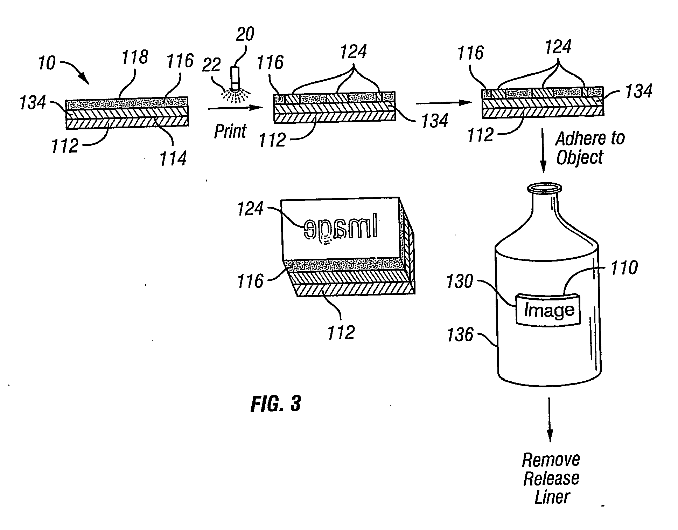

It is noted that the ink jet printer will typically be used in conjunction with computer software for composing and/or generating the image to be printed. In the example of Figure 2, the image is printed onto the sheet precisely as it will appear when applied to a window. That is, in Fig. 2. the image includes text that reads "Image." The word "Image" is printed exactly as it will appear on the window, when the printed sheet is applied on the surface of the window opposite to the surface through which the user will be looking. That is, if the image is to be viewed from, say, the outside of the window and the image is to be applied to the inside of the window, the word "Image" should be printed on the sheet exactly as it is to appear on the window. However, for some applications, it is desirable to print the image backwards on the image transfer sheet for some applications. For example, turning to Fig. 3, the image 124 is printed onto the image transfer sheet in reverse. The printed image may be applied as a label to the exterior of a bottle, for example, and the text will appear on the bottle in an orientation that is proper for one to read.

Considering Fig. 3 further, an image transfer sheet 110 is provided having at least three distinct layers. Layer 112 is a release coated backing sheet. Layer 134 is a water repelling layer, and the upper layer 116 is an ink-absorbing image holding layer as described
in the embodiment of Fig. 2. One purpose of the water repelling layer 134 is to protect the image after printing from water, dirt, and/or other things that could damage the image over time. For example, to use an image transfer sheet for the purpose of labeling the exterior of a bottle, it may be important in some applications that the transferred image is resistant to water.

The water-resistant layer may be a clear, glossy polymer film, comprised of a blend of polyacrylic-based emulsion, nitrile rubber emulsion and polyethylene-based emulsion. The water-resistant layer provides a protective film over the image. Other embodiments of a water-resistant layer may be tinted to provide the image with a tinted appearance when viewed through the water-resistant layer. Alternatively, the water-resistant layer may be mixed with metallic flakes or other materials to provide special effects to the image when viewed.

One embodiment of a water-resistant layer is a film derived from an acrylic based emulsion. A formulation for one such coating is as follows:

| Acrylic Based Emulsion | Parts bv Weight (Dry on Dry Basis) |
|---|---|
| Base Polymer | 75.70 |
| Acrylic Emulsion Coating | 5.80 |
| Jonwax-28 | 8.20 |
| Synthomer S-6000 | 10.30 |
| Total | 100.00 |

In the foregoing table, Jonwax-28 is a wax that is commercially available from S.C. Johnson and Son Limited, of Brantford, Ontario, Canada. The wax serves to provide the emulsion with water resistance. Synthomer S-6000 is a nitrile rubber copolymer that is available from Synthomer GmbH that provides the emulsion with flexibility.

In one particular embodiment, the coating has a pH of between about 7.0 and about 8.2. The coating has total solids of 45.50 +/- 0.5%, and a viscosity of 2,000 - 3,500 cps.

In one procedure for making a clear film coating, the pH of the base polymer is first checked to ensure that it is 7.0 or greater. Jonwax 28 is then added, followed by Synthomer S-6000 under good agitation for 15 - 20 minutes to avoid trapping air into the compound. The solids and viscosity are adjusted using de-ionized water, and the compound is then filtered through a 55 micron filter.

One example of a suitable base polymer is prepared as follows. A soap solution is prepared having components as follows:

| Soap Solution | Parts By Weight |
|---|---|
| De-ionized Water | 99.09 |
| T.S.P.P. (59.7%) | 0.27 |
| OT-75 (75.0%) | 4.25 |
| Disponil FES-77 (32.50%) | 18.06 |
| Surfynol 485W (63.7%) | 5.21 |
| Total | 126.88 |

In the foregoing table, Surfynol 485W is a nonionic surfactant that functions as a wetting agent. It is available from Air Products and Chemicals, Inc of Allentown, Pennsylvania. TSPP is an abbreviation for tetra sodium pyro phosphate. OT-75 is an abbreviation for Aerosol OT 75% Surfactant, which is available from VAN WATERS & ROGERS LTD of Richmond, British Columbia. Disponil FES-77 is a surfactant that is available from Cognis Corp. of Cincinnati, Ohio.

A monomer mix is gradually added to the soap solution under good agitation to form a stable monomer pre-emulsion and is held for delay addition. A catalyst solution is prepared having components as follows:

| Catalyst Solution For Delay Addition | Parts By Weight |
|---|---|
| De-ionized Water | 41.44 |
| K-Persulfate | 1.06 |
| Total | 42.50 |

The potassium persulfate ("K-Persulfate") serves as an initiator for the polymerization. Once the catalyst solution is prepared, the catalyst solution is held for delay addition.

A standard reactor of the type known in the art is purged with N₂. A reactor charge having the following composition may be used:

| Reactor Charge | Parts By Weight |
|---|---|
| De-ionized Water | 219.41 |
| Disponil FES-77 | 2.66 |
| K-Persulfate | 1.06 |
| Total | 223.13 |

The reactor charge is heated to approximately 78° C at moderate agitation. At approximately 78° C, the potassium persulfate is added to the reactor. It is mixed for 3-5 minutes. The monomer pre-emulsion is added at approximately 3.07 parts by weight/minute for approximately 180 minutes.

Approximately 18 minutes after the pre-emulsion is added, the catalyst is added at 0.23 parts by weight/minute for 185 minutes. Agitation is increased as necessary. The reaction temperature is held for approximately one hour between 80 and 85°C after completion of the catalyst addition. The residual monomers are then checked and, when the residual monomers are below 0.05%, the batch is gradually cooled to 35° C.

As the batch cools, an NH₃ solution, a defoamer, a biocide and de-ionized water are added, in approximately as follows:

| **NH3, Defoamer, Biocide and H₂0 Rinse** | **Parts By Weight** |
|---|---|
| 19% NH3 Solution | 5. 00 |
| Defoamer (Drewplus L-191 (100.0%)) | 0.50 |
| Biocide (Kathon LX (1.5%)) | 0.30 |
| De-ionized Water | 25.74 |
| Total | 31.54 |

When the temperature of the batch is at 50° C, the 19% NH₃ solution and defoamer are added. At 40° C, the biocide is added. The rinse water is used to adjust the total solids and the viscosity. The mix is filtered through a 55 micron filter, and the pH, solids, viscosity and residual monomers are checked.

One specific embodiment of the emulsion may have the following specifications. The pH may be about 7.00-7.80. The total solids may be 52.50 +/- 0.5%. the grit may be less than 20 parts per million (ppm) on a 55µ filter. The viscosity may be 1,000-3,500 centipoise (Brookfield LVT #3 SPINDLE/30 RPM/25° C). Methods for the manufacturing of image transfer sheets is further detailed in U. S. Patent Application No. 6,277,229, which is incorporated by reference into this patent application.

Fig. 3 illustrates a process in which an image is printed upon an image transfer sheet and is transferred to a bottle to form a bottle label. In the first step, an image transfer sheet 110 is provided, such that the image transfer sheet has a backing layer 112 that is release coated with release coat 114, a water resisting layer 134, and an ink-absorbing image holding layer 116. The exposed surface of the ink-absorbing image holding layer 116 forms a printing surface 118. The image transfer sheet 110 is fed into an ink jet printer 20 that prints an image with ink 22 onto the surface of the ink-absorbing image holding layer 118.

The printed image is represented in Fig. 3 by reference numeral 124. The image 124 is typically printed in reverse, so that once it is applied to the bottle or other substrate, the text and/or graphic will be properly oriented for a user to read. After printing, the user typically allows the ink-absorbing image holding layer to dry, and then applies the ink-absorbing image holding layer to the bottle by placing the surface 118 of the ink-absorbing image holding layer against the exterior surface of the bottle 136. The user then lightly rubs and/or presses the backing layer 112 to activate the adhesive to a tacky state and to remove bubbles of air in between the image holding layer 116 and the surface 136 of the bottle.

Generally, once the ink-absorbing image holding layer is properly adhered to the surface of the substrate, the backing layer is peeled away so that the image is visible. There can be exceptions, however, such as when the image is to be applied on the inside of a glass window and the backing layer is left on the image transfer assembly to serve as a visual background for the image. The backing layer may even be colored, for example, to provide a colorful background to the image.

The image holding and water repelling layers are typically coated onto the backing layer, although other known methods of applying layers to a backing sheet may be used. Regarding coat weights, in one embodiment the coat weight of the image-holding layer may be as low as 15 g/m², but the coat weight will more typically be between 20-30 g/m². For special applications such as outdoor signage, the coat weight may be as high as 25-50 g/m². Generally speaking, the printed ink will dry more quickly as the coat weight of the image-holding layer is increased.

In one embodiment, the coat weight of the water-repelling layer may be as low as 6 g/m², and is more typically between 10 and 15 g/m². For heavy-duty applications such as outdoor signage, the coat weight of the water-repelling layer may be as high as 20-25 g/m². Generally, the water resistance of the water-repelling layer will increase as the coat weight of the water-repelling layer increases.

The coat weight of the release coating on the release liner will vary depending on the particular type of release liner to be used. Many different release liners are known in the art and are suitable for use with image transfer sheets of the present invention. As one example, a silicone release coating may be applied such that the coating has a thickness of between 0.7g/m² and 2.0 g/m², and more typically between 1.0 and 1.5g/m².

Another aspect of image transfer sheets relates to the smoothness of the release liner. The texture of the surface of the liner may transfer in some embodiments to the surface of the image transfer sheet. So, for example, a very smooth release liner such as a silicone-film liner tends to leave behind a glossy finish to the exposed surface of the image transfer sheet when the release liner is removed. On the other hand, a release liner having a surface that is somewhat rougher can result in a transferred image that is less glossy, such as a matte finish. Consequently, the product designer can vary the Sheffield smoothness of the liner to vary the glossiness of the transferred image. Similarly, a pattern may be formed on the surface of the release liner by way of score lines or protrusions or other surface irregularities, in order to impart a specific pattern to the surface of the image.

The surface of the image transfer sheet that is ultimately applied to the substrate may be provided with a surface pattern in order to permit air to escape from between the sheet and the substrate. This can be particularly useful in preventing surface bubbles and creases in the transferred image. The pattern may be a standard hexagonal micropattern known in the art for providing air egress. The micropattern may be very fine, such that it is not visible to the unaided eye.

Considering now optional additions to the image transfer sheets, a pigment may be added to the image-retaining layer in order to color the layer or to make it translucent. For example, white TiO₂ may be blended into the image-retaining layer to provide better contrast to the printed image. Generally speaking, the TiO₂ may be mixed in at a concentration of 1% - 5% without interfering with the penetration of the ink into the image-holding layer. The TiO₂ can serve to improve contrast of the printed image.

Similarly, a colored pigment such as iron oxide may be used to tint the image-retaining layer yellow. Substances for providing specific colored tints to films are known in the art. Other substances, such as glitter and a variety of other substances known in the art may also be added to provide particular effects.

One particular application for image transfer sheets according to the present invention is for labeling optical media discs. Generally speaking, a compact disc (or "CD") is normally circular in shape, although optical media discs in rectangular and other shapes are also possible. For optical media discs that are round, an image transfer sheet that has a round portion that corresponds in shape to the round optical media disc may be employed, although image transfer sheets may be shapes other than round and still successfully transfer an image onto a compact disc. In most embodiments, though, when the image that is printed upon the image holding layer is transferred to the compact disc, the transferred image holding layer has a round shape that corresponds to the disc onto which it is being transferred. For compact discs that are shapes other than round, such as rectangular optical media discs, the optical media disc adhesive image transfer sheet may have a portion that corresponds to the shape of the optical media disc to be labeled.

It is noted that image transfer sheet that do not physically have a round portion corresponding in shape to the optical media disc may be employed to transfer a round imaged portion onto the optical media disc. For instance, a large rectangular sheet may be used, but only a circular pattern is printed onto the sheet, thereby activating only a circular area of the image-holding layer. Alternatively, a non-circular pattern may be printed on a non-circular sheet, but only a circular portion of the image holding layer transfers when the pressure and/or heat generated by the user rubbing the backing layer extends only in the circular are defined by the disc. Other variations are possible.

Optical media discs have a circular shape and have a central circular opening. The circular opening can be, for example, a full-face type of (narrow) opening corresponding to the diameter of the center opening of the disc or can be a standard diameter such as 1 5/8 inch. A sheet for image transfer onto an optical media disc circular will typically have a portion corresponding in shape and diameter to a standard optical media disc. For example, the diameter of the optical media disc may be 4 ½ inches, although other optical media discs have different standard diameters.

One example of an image transfer assembly for labeling an optical media disc can has one or preferably two diametrically opposed tabs extending out from the label and attached thereto. The image transfer assemblies have an image holding layer and, optionally, a water-resistant layer as illustrated in Fig. 3. The assembly is backed with a liner sheet, which is normally releasable from the image holding layer and the optional water resistant layer. The portion of the assembly that will label the optical media disc is outlined by weakened separation lines (die-cut, perforated, scored and other) in the liner sheet.

After the sheet has passed through a printer or copier and the desired indicia and/or graphics printed on the portions of the sheet coated with an image-holding layer, the tabs are pushed or pulled up and grasped to pull the optical media disc labeling portion off of the sheet. The user can then grasp the other opposing tab, or can grasp and pull both tabs at the same time. By grasping the two tabs, the user does not contact any surface of the printed image holding layer. The user can then position the exposed surface of the printed image holding layer against the surface of the optical media disc to be labeled, lightly rub the backing sheet to activate the image holding layer to a tacky state and to force any air trapped between the label and the surface of the optical media disc to egress, and then remove the backing sheet.

Alternatively, she can position the image transfer assembly on a label applicator device. In one embodiment, the image transfer assembly is positioned with the side of the sheet that is coated with image holding layer facing up, and the tabs on the image transfer assembly hooked into place on the applicator. The disc is then pressed down on a center post of the device into contact with the image holding layer. The disc with the image holding layer (and optional water repelling layer) adhered thereto can be removed from the device.

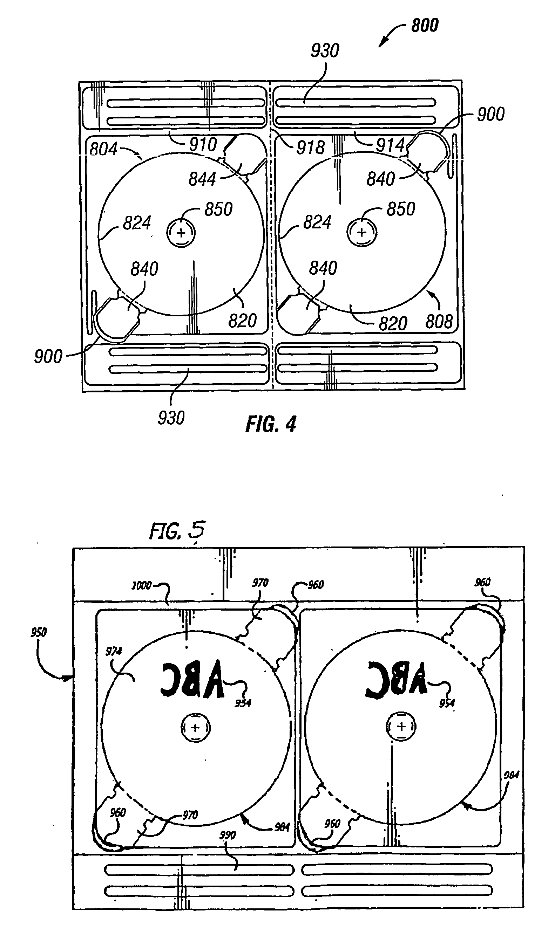

Referring to FIG. 4, one embodiment of an image transfer sheet for transferring an image to an optical media disc is shown generally at 800. The sheet includes two side-by-side image transfer assemblies 804, 808. The assemblies are identical except that one is rotated one hundred and eighty degrees relative to the other one. Both include circular image transfer portions 820, with the outside circumferences defined by die-cut lines 824 through the release liner around the entire perimeter. The center hole 850 is formed by a die-cut line, and the hole can either be a full face (small) hole or a standard larger hole.

The tab portions 840, 844 of the label assemblies are formed by die-cut lines having ties and cuts through the facestock sheet. The die cuts may extend about the entire circular portion of the disc, so that the image-holding layer separates cleanly from the sheet even at the base of the tabs. Each of the tabs has a pair of opposing side notches 890. These notches are provided to help position and hold the labels in place on label applicator devices, as will be shown and discussed later in this disclosure. The notches can have a central tie portion.

Openings 900 may be cut from the sheet to provide crescent-shaped openings that assist the user in removing the tabs and circular disc-labeling portion from the assembly. Openings 900 may be cut by any of the standard methods for cutting such openings that are known in the art, such as die-cutting or laser-cutting. The assembly may also include a plurality of image transfer areas 930 for labeling the spine of an optical media disc case, or any of a variety of other shapes and sizes of patches of transferable image holding layer.

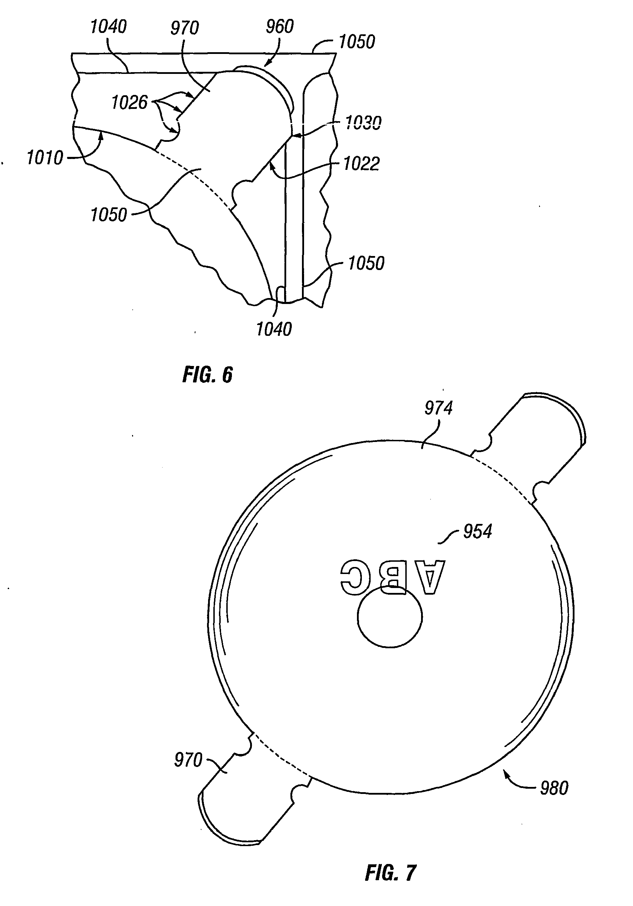

Fig. 5 illustrates an alternative embodiment in which crescent-shaped openings are cut from the area at the end of each of the four tabs. Fig. 6 is a detail view of the opening 960 at the end of one of the tabs. In use, after the image transfer sheet is printed, the user inserts her finger or a finger nail into one of the crescent-shaped openings 960 and pulls up on the respective image transfer assembly, grasping the respective tab 970 from the front and back. The circular disc-labeling portion and associated tabs separate from the assembly along the lines of weakness, which may be perforations, microperforations, scorelines or other lines of weakness known in the art. The user may grasp the opposing tab on both sides thereof between the fingers of her other hand. The image transfer assembly 980 is then as depicted in FIG. 7, ready for insertion on a label applicator device, or for a direct application onto a disc without an applicator device.

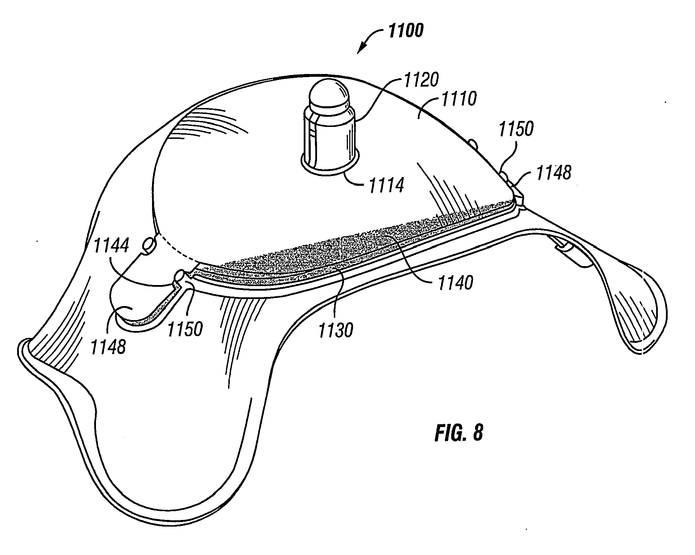

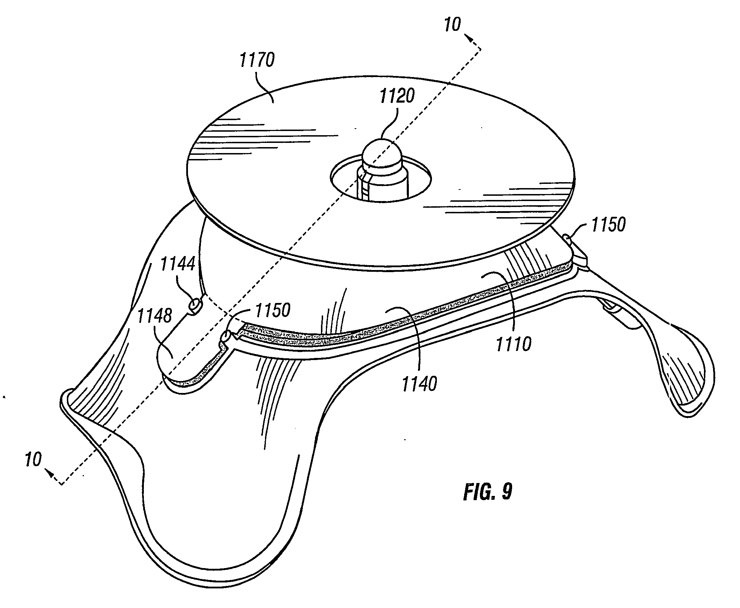

FIG. 8 is a perspective view of an applicator device shown generally at 1100 with an image transfer assembly 1110 of the present invention in position thereon. It can be seen that the assembly 1110 is fitted via its central hole onto the central post assembly 1120. The image transfer assembly is held on the soft curved support surface 1130 of the device, with the image holding layer side 1140 facing up, by the positioning the tab notches 1144 of the tabs 1148 onto the upright device pins 1150. With the image transfer assembly secured to the applicator, the disc 1170 is positioned on the center post 1120 as shown in FIG. 9 and pressed down onto the image transfer assembly 1100, thereby adhering the image to the disc. That is, the disc 1170 is shown in FIG. 9 in a rest position on the post assembly, ready to be manually pressed down onto the adhesive surface of the image transfer assembly 1170.

Generally speaking, applicator 1100 includes a flexible body member formed of polypropylene, polyethylene or other flexible plastic compounds. The applicator body member has "feet" at both ends thereof and an arched central portion extending between the feet. A post assembly shown generally at 1120 extends up from the center of the top of the body member and is integrally formed therewith. The applicator body member slopes in longitudinal directions away from the post assembly 1120 and can be shaped similarly to a top portion of a bridge. (Less preferably, the body member can be shaped so that its top label support surface has a dome shape). The top sloping surface of the body member 1106 forms a support surface for an image transfer sheet.

A soft pad 1130 (FIG. 8) is preferably disposed on the surface and defines the contact surface for the image transfer sheet. The pad 1130 can be a urethane foam, rubber or other compound. It preferably has a bottom pressure-sensitive adhesive layer to adhere to the support surface of the applicator body 1106.

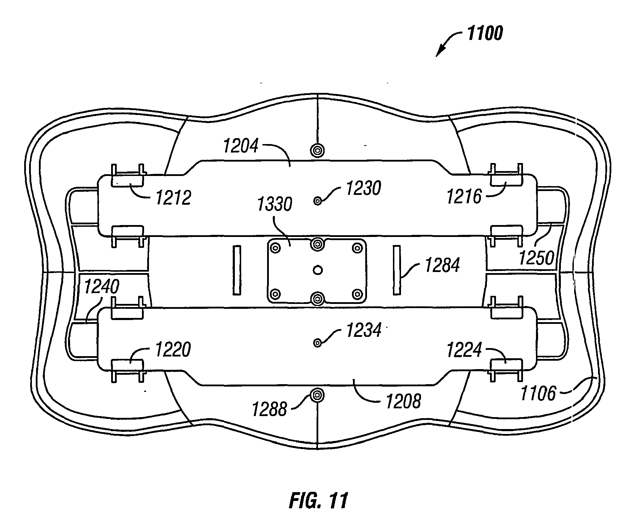

The flexible plastic member 1106 has an arch shape. A pair of elongate leaf springs 1204, 1208 are attached to the bottom surface of the body member 1106 using a pair of clips 1212, 1216, 1220, 1224 at both ends and a central locator pin 1230, 1234 in the center, as illustrated in FIG. 11. The clips and the pins are integrally formed with the body member 1106 and extend downwardly from the lower surface thereof. Further, ribs 1240, 1250 are provided to reduce friction between the leaf springs 1204, 1208 and the bottom surface of the body member 1106. The leaf springs 1204, 1208 are formed preferably from stainless steel or other type of spring steel. Instead of providing two leaf springs, a larger leaf spring with a central hole can be used. Further, instead of using one or more separate springs, the body member itself can provide the spring return action, such as by making the body member out of an engineered plastic.

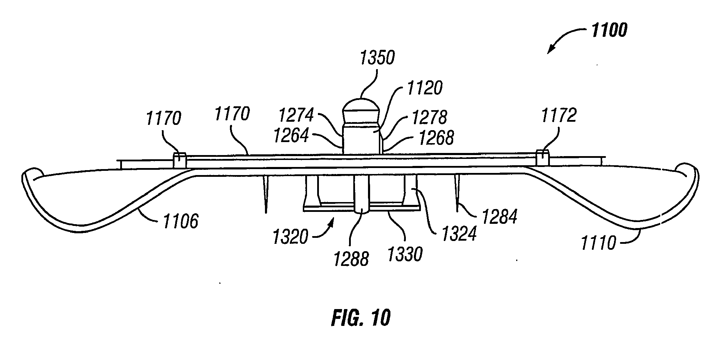

The post assembly 1120 includes a generally cylindrical member 1240 having a flat top edge and a hollow interior. Formed on opposite sides thereof are elongate flexing ribs 1264, 1268 attached at their tops and bottoms but flexible in the center portions. The ribs 1264, 1268 have nibs 1274, 1278 at central locations extending outwardly. The nibs 1274, 1278 define a disc support surface when a disc 1170 is placed in an initial rest position on the post assembly 1120 as shown in FIG. 10.

When the user then pushes down on the disc 1170, the ribs 1264, 1268 and especially the nibs 1274, 1278 are pushed and flexed inwardly generally beyond the circumference of the cylindrical portion, thereby allowing the disc to be pressed down as shown in FIG. 10 against the image holding layer. As the disc 1170 initially contacts the image holding layer of the image transfer sheet 1130 and is further pressed down manually by the user, the disc 1170 is pressed towards the support surface of the applicator 1100. The disc gradually contacts further outwardly disposed portions of the image transfer sheet 1130. This gradual application of the image holding layer aids the image holding layer in adhering in a crease-free and bubble-free way to the disc. The fully pressed-down condition of the applicator 1100 is shown in Fig. 10. The fin and post stopper members 1284, 1288 engage the surface on which the applicator 1100 rests to define a fully pressed position of the applicator 1100.

The applicator 1100 can also be uniquely and readily adapted for use with labels having any size of opening. For labels having a large central opening, a centering means for centering the larger hole concentrically about the narrower post assembly is needed. The present invention provides such a unique structure (a four-prong locator assembly shown generally at 1320 in Fig. 10) which the user can move from an inoperative, out-of-the-way position in which small hole opening image transfer sheets can be used, to an operative position wherein the structure is in place to define a large hole label locator system.

The locator assembly 1320 includes a plurality of posts 1324. Although the preferred number of posts 1324 is four or three or two, more than four posts can be used. Other structures aside from posts, such as arcuate members, can be used. These posts 1324 are interconnected together with a bottom plate 1330 as shown in FIGS. 11, for example. In other words, the four posts 1324, connected together by the bottom plate 1330, move together up and down through respective openings in the body member 1106. A post 1340 is connected to the top surface of the plate 1330 and extends through a central opening in the body member 1106 and up through the center of the post assembly 1120. And a knob 1350 is attached to the top of the post 1340. A knob 1350 provides a handle by which the user can pull the post 1340 up and thereby the four locator posts 1324. The four raised locator posts 1324 allow the applicator 1100 to center and accommodate a larger opening label 1190. Alternatively, this label can also be provided with the no- touch tabs as described for the small hole label. The label, if it has tabs, can similarly be held in place by the four pins 1170, 1172, engaged in the tab side notches.

The label applicator 1100 is typically manufactured and assembled by the manufacturer. For one embodiment of the application, the following components are delivered to or made by the manufacturer: the applicator body member 1106, the four prong locator assembly 1320, the knob 1350, the two leaf springs 1204, 1208, and the foam pad 1136. The springs 1204, 1208 are delivered pre-cut and shaped to a curve. And the foam pad 1136 is preferably delivered in sheets with pads pre-cut and the logo printed on them and an adhesive layer having a protective silicone liner. The springs 1204, 1208 are slid under their respective clips 1212, 1220 at one end thereof until they can be pushed no further. The applicator body member 1106 is then bent, and the springs 1204, 1208 are slid back under the clips 1216, 1224 at the other end of the body member. The springs 1204, 1208 are pushed in until the locator pins 1230, 1234 engage in the respective holes in the springs. The four-prong locator assembly 1320 is then pushed up through the holes in the applicator body member 1106. The knob 1350 is snapped on the top of the post 1340 of the prong locator assembly 1320. The liner is peeled from the foam pad 1136, and the foam pad is positioned in place, adhered on top of the applicator body member 1106. An embossed outline on the applicator body member 1106 acts as a guide for correctly positioning the foam pad 1136.

The consumer removes the assembled applicator 1100 as provided by the manufacturer from its box or other packaging (not shown). The image transfer sheet assemblies can be provided in sheets in the packaging and/or in separate packages. The user will design, using software on his computer, the desired indicia to be printed on the labels. The sheets are then passed through an ink jet printer, or are written upon with a liquid ink pen, or otherwise printed on with text and/or graphics. The printed image transfer sheet will then be separated off of the sheet by the user, who grasps the tabs to avoid touching the printed image that will be transferred to the disc.

The image transfer sheets may have a natural curl to them, and one embodiment of an applicator described herein takes advantage of that curl by providing a curved support surface on the applicator 1100 for the labels. The present invention also provides an advantage in that the pins 1170, 1172 grip the notches 1180, 1184 in the no-touch tabs and hold the image transfer sheet snugly against the support surface of the applicator. The image transfer sheet 1130 is placed with the image holding layer up on the curved foam pad 1136 of the applicator 1100 using the locator pins 1170, 1172 to locate and hold it in position.

The body member, when not pressed down, preferably has a height of 2.875 inches and has a footprint having a width of 5.25 inches and a length of 8.125 inches. When in a compressed label application position has a height of 1.5 inches and a footprint of the same width as when in the rest position but a longer length of 9.125 inches. while small hole image transfer sheets can have a central hole diameter of .604 inch, the hole image transfer sheets can have a central hole diameter of 1.625 inches. Dimensions other than those set forth above as would be apparent to those skilled in the art are within the scope of this invention, as are different configurations and materials.

For example, the applicator can instead of the above-described post assembly use a plunger arrangement. However, it is intended that all such variations not departing from the spirit of the invention be considered as within the scope thereof.

The foregoing has presented various alternative embodiments of image transfer sheets and ways of applying images to various objects. It should be understood, however, that the foregoing embodiments are presented for purposes of example only. The invention itself is broader than the specific examples that are used herein in order to illustrate applications of the invention. Various alternatives may be implemented within the scope of the invention. For example, adhesive transfer sheets may be pre-printed prior to sale to the end user. The end user may then use the pre-printed image transfer sheets for a specific purpose, such as for applying a sunlight-reducing film to a window.

As another variation, the image transfer sheet may be coated with ink-receptive coating in only specific locations. For instance, a pattern of label-sized areas of transferable ink-receptive coating may be coated onto a sheet, with a boundary about each label of a non-transferable coating. Consequently, after printing, only label-shaped sections will transfer onto the substrate. In this manner, specific portions of the image transfer sheet may be made transferable after printing, with other areas non-transferable, to define a transferable pattern or to limit the size or shape of the areas that will transfer.

To improve image transfer, and particularly to improve separation of the printed image from the backing sheet when the image is transferred, the image holding layer may be printed upon such that boundaries where the image is to be separated from the sheet are printed upon more heavily than in other areas. For example, extra ink may be printed about the perimeter of the image where the image is to be separated from the backing sheet. This step of printing additional ink may be accomplished by means of software, such as by adjusting printing software known in the art to instruct the printer to print more heavily about the perimeter of the image.

Patent Cooperation Treaty Application No. PCT/US99/09737 (International Publication No. WO 99/56682), which describes several different sheet structures and formulations for adhesive image transfer applications, is herein incorporated by reference. Additional disclosure is provided by U.S. Patent No. 6,080,261, which is entitled "Adhesive Image Transfer Technique" and which issued on June 27, 2000 and is also herein incorporated in its entirety.

The present invention is not limited to the specific embodiments that are illustrated in this Detailed Description. The meets and bounds of the invention are to be determined from the wording of the following claims alone.

It should also be noted that the various commercial products that are cited above are for illustrative purposes only, and that substitutes from other manufacturers may, of course, be used. Furthermore, the present invention is not limited to the specific compositions presented above, which are given only as examples of the coatings employed in the present invention.

As other alternatives, users may indulge in a new form of digital art wherein they could print various images onto the facestock-less constructions, according to the teachings of the present invention, as overlay one transferred image over another, in order to make a collage. These transferred images may be placed upon various materials and surfaces such as paper, walls, window and tile for example.

Additionally, tape constructions may also be made according to the disclosed teachings of the present invention, that may be utilized for highlighting or correction purposes. These constructions may be provided in various colors, including white, and/or opacity in tape form and placed adhesive layer down upon the area to highlight, for example text in a book, and the liner or backing rubbed to activate the image holding polymer layer to a tacky state, then removing the liner or backing to leave the printed (and possibly color-printed) layer behind. Once again, it is to be understood that the embodiments of the invention disclosed herein are illustrative of the principles of the invention and accordingly the present invention is not limited to that precisely shown and described in the present specification.

### ACRYLIC EMULSION COATING FOR FILMS, PAPER AND RUBBER

### FIELD OF THE INVENTION

The present invention is directed to an acrylic polymer emulsion, which, when blended with an elastomeric material can be used as a coating for use on various products. One especially useful application is for coating a film or paper substrate for use as a sheet upon which images may be printed with ink jet printers. When applied to paper or film to produce print sheets, the coating provides a high quality, clear, glossy surface that freely receives water based inks such as are commonly used with ink jet printers. These properties make print sheets coated with the polymer especially useful as photographic quality papers and transparencies for use with ink jet printers. Another application for the polymer is for coating rubber articles such as gloves. When applied to such rubber articles, excellent mold release, donning and anti-blocking properties can be achieved.

### BACKGROUND OF THE INVENTION

Ink jet printing is a well-known and commonly used means of producing an image onto a substrate. Ink jet printers typically use one of two different types of ink, dye-based inks and pigment-based inks. With dye-based ink, the color of the ink is imparted by a dye that is soluble in a fluid carrier. The fluid carrier is typically a blend of water and glycol. Such dye-based inks are relatively inexpensive and easy to process, and are suitable for use in low cost applications in which long term durability is not a concern. In pigment-based inks, the color is imparted by particles that are dispersed, rather than dissolved, in a fluid carrier. Water-soluble fluids are typically used as the carrier for pigment-based ink for improved lightfastness.

Some of the most recent advances in ink jet printer technology have been in the area of photo-quality or near photo-quality printing. While printers and inks are able to achieve the high resolution necessary for photo-quality printing, many of the printing papers and other printing films (such paper and films collectively referred to in this specification as "facestocks") available to the consumer fail to permit the consumer to take full advantage of the printer's capabilities. A first shortcoming is that many of the photo-quality facestocks that are capable of high-resolution photo-quality printing do not impart sufficient glossiness to match that of prints made on photographic paper by traditional photographic techniques. A second shortcoming is that many of the photo-quality facestocks with the desired glossiness are incapable of the high resolution desired for a photo-quality print. To the extent that some facestocks have been able to achieve both high gloss and high resolution, still further problems such as slow dry times are often realized. It is important that the ink applied to a facestock be able to dry fast to permit the handling of the print soon after printing, and to allow printed sheets to be stacked in a printer's output tray without resulting in any smearing the printed images.

In order to meet the print facestock requirements for high gloss, good ink absorbency and fast print drying; prior art ink jet facestock technology often relies on the use of various coatings which are applied to a substrate. For many such coatings, multiple layers are required which tend to require elaborate, and therefore, expensive manufacturing techniques. Many coatings also require mechanical treatment such as the use of a polished casting drum in order to achieve the desired glossiness, a step that still further adds to the manufacturing cost. Moreover, such facestocks still tend to be slow drying, making them susceptible to smearing of the printed images. Improved facestock coatings that are fast drying, glossy and capable of high-resolution are desired for the production of facestocks used for photo-quality computer printing applications.

Rubber articles made from natural or synthetic rubber include surgical gloves, physician examining gloves, industrial work gloves, prophylactics, catheters, balloons, tubing, sheeting and the like. Some of these articles, and in particular gloves, require good donning properties, that is, the ability of the rubber article to be slid on and off skin surfaces without undue clinging or friction. Surgical gloves require good wet donning properties, that is, the ability to be slid over damp or wet skin surfaces. Physician examining gloves and industrial work-gloves require good dry donning properties, that is, the ability to be slid over dry skin surfaces.

The comfort of such a glove, whether worn for surgical use, examination use, or industrial use, can generally be improved, especially if the glove is worn for a prolonged period of time, if the inside of the glove is absorbent. Furthermore, good absorbency properties in which the buildup of moisture within a glove is prevented can improve the wearer's dexterity. However, while absorbency is desirable, the absorbency of a rubber article such as a rubber glove cannot be permitted to compromise the barrier properties required of such gloves.

Another desirable property for gloves and other rubber articles is that the outer surfaces permit such articles to be stacked against one another without sticking or "blocking" to one another. Of course, neither should the interior of a glove or other rubber article stick to itself as such blocking makes donning difficult.

It is also desirable that any coating that is to be applied tn the mold side of the article impart good mold release properties. Without good mold release properties, the finished articles can be difficult to remove from the molds, especially if mechanical devices are used for stripping the finished articles from the molds. Without good mold release properties, a signifcant number of articles may be torn during the stripping step. Yet another benefit of a coating with good mold release properties is that it simplifies the cleaning of the mold. This is important, as a single mold should be capable of producing a large number of articles without having to be taken off the manufacturing line for elaborate cleaning procedures.

To achieve the desirable characteristics tor gloves and other rubber articles, various coatings have been developed. Such coatings can be applied to the inner, outer, or both surfaces of the rubber article. One of the simplest coatings has been to apply a powder such as talc or cornstarch to the surfaces of the article. The use of such a powder improves both the donning and blocking characteristics of such gloves.

The conventional way of manufacturing rubber articles such as powdered gloves has been to dip a mold or former, having the shape of the article to be formed, into a coagulant slurry containing both powder and a coagulant such as calcium nitrate or calcium carbonate. After drying, the mold is immersed in a rubber emulsion for a time sufficient for the rubber to coagulate and form a coating of desired thickness. Water leaching is generally employed as the next step in order to remove rubber impurities. Once the leaching process has been completed, the rubber article is then cured and dipped into a starch slurry. The starch-coated surface is then dried, leaving a coating of powder on the surface of the glove. After cooling, the rubber article is stripped from the mold. For most rubber articles, the stripping step results in the glove being turned inside out. The mold is then cleaned and used again for making another article.

An important drawback to the use of powder-coated gloves and other articles is that for many applications, the powder can contaminate the environment in which the wearer of the article is working. For example, for certain surgical procedures, powder-coated gloves are unacceptable as such a powder coating can contaminate the surgical field. Similarly, for gloves worn in clean rooms such as are commonly found in the electronics industry, the powder coating of a rubber glove can cause undesirable contamination of the clean room. Therefore, coatings are desired which can achieve the desirable donning and blocking properties for rubber articles without the use of powders.

Methods and materials used for glove manufacture are described, for instance, in U.S. Patents 3,411,982 and 3,286,011 to Kavalier et al., both incorporated herein by reference, "Polyurethane Latexes for Coagulation Dipping," Sadowski et al., Elastomerics, August 1979, pp. 17-20, incorporated herein by reference, and "Dipping with Natural Rubber Latex," Pendler et al., Natural Rubber Technical Bulletin, 1980, also incorporated herein by reference.

One way to eliminate the traditional powder coatings for gloves has been through the use of one of various surface treatment methods for the finished article. One such surface treatment method requires the halogenation of the surface of the article. Chlorination is the most commonly used of such methods. However, while effective, such treatments are often expensive. Moreover, they often have adverse affects on the shelf life of the rubber articles formed. It would be desirable to provide a rubber article with a powder-free donning surface without resorting to the expensive and article-deteriorating practices that are now commonly used. Such a process could substantially reduce the cost of manufacture and maximize the shelf life of the rubber article.

Other methods of making powder-free rubber articles such as gloves have included the use of coatings with silicon-based chemicals. However for the clean rooms employed in electronic chip manufacturing activities, the inclusion of silicon in the coatings is unacceptable as it can cause silicon contamination of delicate electronic components. Therefore, a coating for gloves and other rubber articles that is both powder-free and silicon-free while providing good donning, mold release and anti-blocking properties is desired.

### SUMMARY OF THE INVENTION

The present invention sets forth a polymer emulsion useful for forming a coating a number of different products. The polymer emulsion is produced as the reaction product of a monomer mixture comprising an alkyl (meth)acrylate, a quaternary amine (meth)acrylate, a hydroxyalkyl (metfi)acrylate, an N-vinyt lactam, an ethylenically unsaturated carboxylic acid, and a fluorinated (meth)acrylate. Additionally, a hard monomer and/or an ethoxylated. (meth)acrylate monomer may be provided. The polymer emulsion is produced under vigorous mixing and preferably in the presence of a plurality of surfactants to further ensure good mixing. In the preferred embodiment, the polymer emulsion is made by a sequential polymerization reaction of two different monomer mixtures. For such a sequential polymerization reaction, the first monomer mixture is first allowed to partially react before the second monomer mixture is added to the reactor. Improved properties for the resulting polymer coating result when the second monomer mixture has a lower amount of ethylenically unsaturated carboxylic acid than the first monomer mixture. In particular, when such a sequential polymerization reaction is used, the resulting polymer emulsion has a lower viscosity at higher solids concentration than would otherwise be achieved if a single monomer mixture were reacted. By having a lower viscosity at a higher solids content, the polymer emulsion is far easier to handle.

The polymer emulsions of the present invention are useful in forming coatings for a variety of materials. As one example, the coatings can be applied to a facestock such as paper or vinyl in order to make a coated facestock for use in ink jet printing applications. Such coated facestocks exhibit excellent clarity and gloss characteristics, are fast drying and permit the printing of high-resolution photo-quality images using ink jet printers. Furthermore, even though such coated facestocks exhibit high gloss, they are still highly flexible and resist cracking and separation from the substrate. Moreover, the coated facestocks are easily fed through ink jet printers without causing jamming or other difficulties for the printer. Preferably, the coating is formed by diluting the polymer emulsion with an elastomeric material such as a nitrile rubber latex to a concentration of about 95% polymer emulsion. The coating is applied to a facestock at a dry coat weight of between about 10 and about 50 grams per square meter.

The polymer emulsions are additionally useful in forming coatings for rubber articles. For molded rubber articles, such coatings exhibit excellent mold release properties, even when mixed with a high concentration of coagulants such as calcium nitrate which are often used in the forming of nitrile rubber latex articles. In addition to outstanding mold release properties, the coatings provide excellent anti-blocking properties when applied to the outside surface of the rubber article. When applied to the inside surface of a rubber article such as a rubber glove, the coatings still further provide excellent donning properties, for both wet donning and dry donning applications. Moreover, the absorbency imparted to an article such as a glove whose inside surface is coated with the polymer coating of the present invention make the glove more comfortable to wear for extended periods of time. Preferably, such a polymer coating is formed by diluting the polymer emulsion with an elastomeric material such as a nitrile rubber latex. Preferably, the polymer emulsion is diluted with nitrile rubber latex to a concentration of about 25% by weight on a dry basis. The resulting emulsion of polymer and nitrile rubber latex is then diluted with water to a concentration of between about 2 and 8% solids to form a coating for a nitrile rubber article. Articles coated with the polymer coating of the present invention are strong, flexible and exhibit very high stretch without appreciable cracking or separation of the coating from the article. Such coatings can be applied to natural latex articles as well as to nitrile rubber latex articles.

### DETAILED DESCRIPTION OF THE INVENTION

The polymer emulsions of the present invention are acrylic emulsion copolymers that are the reaction product of a mixture of monomers. In this specification, the term "monomer" is meant in a broad sense to encompass monomers and oligomers as would be used in building the desired copolymers. The monomers generally include one or more alkyl (meth)acrylate monomers. As used in this specification, the term (meth)acrylate is intended to refer to either an acrylate or a methacrylate. For example, the term alkyl (meth)acrylates is meant to reefer to the group of chemicals that includes both alkyl acrylates and alkyl methacrylates.

The monomer mixture also includes one or more quaternary amine (meth)acrylate monomers, one or more hydroxyalkyl (meth)acrylate monomers, one or more N-vinyl lactam monomers, one or more ethylenically unsaturated carboxylic acid monomers and one or more fluorinated (meth)acrylate monomers. In the preferred embodiment, the monomer mixture further includes one or more hard monomers and one or more ethoxylated (meth)acrylate monomers.

The alkyl (meth)acrylates and hard monomers together generally provide the durability and glossiness to the polymer emulsions. Preferred alkyl (meth)acrylates are those having from 1 to 10 total carbon atoms. Examples of suitable alkyl (meth)acrylates monomers include methyl acrylate, ethyl acrylate, butyl acrylate, ethylhexyl acrylate, isooctyl acrylate, methyl methacrylate and isobutyl methacrylate. As used herein, the term "hard monomer" is meant to include monomers including alkyl (meth)acrylate and styrene monomers having a glass transition temperature (T_{g}) greater than room temperature or about 25°C. Examples of suitable hard monomers include alkyl (meth)acrylates monomers with a T_{g} greater than about 25°C, such as methyl methacrylate and isobutyl methacrylate, and styrene and styrenic monomers.

While the use of at least one hard monomer is desired in the preferred embodiment for durability and to prevent tackiness of the resulting coatings, at least a portion of the one or more alkyl (meth)acrylates selected should also have a T_{g} of less than 25°C in order to prevent the coatings from being too brittle. Most preferably, a combination of alkyl (meth)acrylates and hard monomers should be selected to achieve the desired T_{g} for the coating. In the preferred embodiment a combination of methyl acrylate, butyl acrylate and methyl methacrylate is provided. The one or more alkyl (meth)acrylates, are preferably provided in a total amount between about 60 and 80% by weight of the total reactants. The hard monomers are preferably provided in a total amount between about 5 and 15% by weight of the total reactants. It should be apparent to one of ordinary skill in the art that some alkyl (meth)acrylates such as methyl methacrylate or isobutyl methacrylate fall within the definition of a hard monomer as well as the definition for an alkyl(meth)acrylate. Therefore, to the extent the preferred embodiment calls for amounts of both types of monomers, the inclusion of an alkyl (meth)acrylate with a T_{g} greater than 25°C will satisfy both requirements.

Quaternary amine (meth)acrylates are cationic monomers that, when combined with the other monomers are considered to provide improved water absorbency properties to the coatings. The preferred quaternary amine (meth)acrylate is a product knows as Ageflex FA11Q80MC which is an 80% aqueous solution of dimethylaminoethyl acrylate methyl chloride quaternary available from CPS Chemical Co. of Old Bridge, New Jersey. The quaternary amine (meth)acrylate is preferably provided in an amount .between about 5 and 15% by weight of the total monomers.

The hydroxyalkyl (meth)acrylate monomers are also generally considered as providing improved water absorbency characteristics to the coatings of the present invention. They also provide pigment-bonding properties that are especially useful for film coatings for printing applications using pigment-based inks. The preferred hydroxyalkyl (meth)acrylate monomer is 2-hydroxyethyl methacrylate (HEMA) such as that available from Mitsubishi Rayon Co., Ltd. of Tokyo, Japan. The hydroxyalkyl (meth)acrylate monomer is preferably provided in an amount between about 5 and 35% by weight of the total monomers.

The inclusion of one or more N-vinyl lactam monomers in the monomer mixture, together with the hydroxyalkyl (meth)acrylate monomers, is generally considered to help fix the dye to the coating when the coating is used for making coated facestocks for use with printers. The preferred N-vinyl lactam monomers are N-vinylcaprolactam monomers and the more preferred are vinyl pyrrolidones. The most preferred is N-vinylpyrrolidone. Such a product is available from ISP Technologies Inc. of Wayne, New Jersey under the trade name V-PYROL/RC. Preferably, the N-vinylcaprolactam is provided in an amount between about 5 and 15% by weight of the total monomers.

The one or more ethylenically unsaturated carboxylic acids, when combined with the hydroxyalkyl (meth)acrylate, also helps to improve the water absorbency characteristics of the coatings. The preferred ethylenically unsaturated carboxylic acids are alkyl (meth)acrylic acids, carboxyethyl acrylates and itaconic acids. The most preferred ethylenically unsaturated carboxylic acids are acrylic acid and methacrylic acid. The preferred range for the ethylenically unsaturated carboxylic acids is between about 4 and 15% by weight of the total monomers. If less than about 4% of acid is provided, the resulting polymer coating tends to have too slow of a dry speed when coated to a film for use in an ink jet print film application.

The one or more fluorinated (meth)acrylate monomers tend to bloom to the surface of the coating once cured and are generally considered to prevent the coated articles from blocking. When the coating is used for coating facestock used for printing, the fluorinated (meth)acrylate monomers also helps the printer to better grip the facestock for feeding it into the printer. Surprisingly, this benefit is provided without adversely affecting the desirable glossiness of the coated facestock. When a coating with fluorinated (meth)acrylate monomers is used for producing coated rubber articles such as gloves, the resulting gloves have improved tactile feel. The preferred fluorinated (meth)acrylate monomer is trifluoroethyl methacrylate. Trifluoroethyl methacrylate is available from Elf Atochem North America of Philadelphia, Penrisylvania under the trade name MATRIFE. Because the fluorinated (meth)acrylate monomers tend to bloom to the surface, very small amounts are effective at achieving the desired properties. Therefore, any positive amount of fluorinated (meth)acrylate monomer is preferred. Most preferably the fluorinated (meth)acrylate monomers are provided in an amount between about 0.1 and 5% by weight of the total monomers.

In one preferred embodiment, one or more ethoxylated (meth)acrylate monomers are also provided to the monomer mixture to act as an active surfactant to both improve the reaction conditions during polymerization and improve the properties of the coatings by reducing the surface tension. The preferred ethoxylated (meth)acrylate monomers are ethoxylated hydroxyalkyl (meth)acrylates with an average of between 5 and 20 ethylene oxide units. The most preferred are ethoxylated hydroxyalkyl (meth)acrylates with an average of between 10 and 15 ethylene oxide units. An ethoxylated hydroxyethylmethacrylate with an average of 15 ethylene oxide units is available in an 88% by weight solution with 12% by weight propyleneglycol monomethylether from Nippon Nyukazai Co., Ltd. of Tokyo, Japan under the product designation MA-150MF. An ethoxylated hydroxyethylmethacrylate with an average of 10 ethylene oxide units is available from Nippon Nyukazai Co., Ltd. under the product designation MA-100A. The ethoxylated (meth)acrylate is preferably provided in a positive amount between about 0 and 5% by weight of the total monomers, most preferably between about 0.1 and 5% by weight.

The coatings made from the polymer emulsions provided by the reaction of the individual monomer components set forth above need to be durable and flexible without being tacky on the one hand, or brittle on the other hand. As the individual monomers that make up the monomer mixture, with the exception of the low T_{g} alkyl (meth)acrylates, tend to all have glass transition temperatures above room temperature, it is important to include at least some monomers with low T_{g}. Otherwise, if the concentration of monomers with high T_{g} is too high, and an insufficient amount of monomers with low T_{g} are included, the resulting coatings will tend to be too brittle. Therefore, the upper limits for the.amount of each of the individual monomers is generally dictated by T_{g} limitations.

The reaction of the monomers is carried out by known methods. In the preferred embodiment, a heated reactor is initially charged with deionized water and one or more surfactants. Because a number of monomers with different physical properties are being reacted, in the preferred embodiment, a number of different anionic and nonionic surfactants are provided, each selected for improving the miscibility of a particular monomer or group of monomers. The initial reactor charge is subjected to a nitrogen purge to remove oxygen, thereby reducing the extent of undesirable oxidation reactions. Because thorough agitation is critical to the reaction, vigorous agitation is started immediately and is continued throughout the reaction. A small amount of defoaming agent is also added at this time to reduce foaming of the reactants. A suitable defoaming agent is available from Drew Industrial Division of Ashland Chemical Company of Booton, New Jersey under the trade name Drewplus L-191. An amount of activator is also added. The most preferred activator is the sodium salt of ethylenediaminetetraacetic acid, iron(III), or Fe-EDTA, which further acts as an oxygen scavenger. Other preferred activators include ascorbic acid and sodium metabisulfite.

Prior to their introduction into the reactor, the monomers, except for the quaternary amine (meth)acrylate, are separately mixed with one another. The pH of the monomer mixture is measured and a base such as ammonia is added under good agitation to adjust the pH to within a slightly basic range. Preferably, a 16% ammonia solution is used to adjust the pH to within the range of about 7.5 to 8. The quaternary amine (meth)acrylate monomer is then added and the pH is again measured. At this point, the mixture tends to be slightly cloudy. Deionized water is added until the dispersion is clear under vigorous agitation. It is important that the mixture be clear as any cloudiness in the monomer mixtures can ultimately result in cloudiness in the coatings produced. It is also important to recognize that the mixtures should be maintained under constant agitation as without such agitation, the dispersions will quickly separate into two layers. However, if such separation occurs, the desired dispersion can again be achieved under vigorous agitation.

Once the reactor reaches a temperature of about 45°C, an initiator is introduced. Suitable initiators are water-soluble initiators such as azo bis(4-cyanovaleric acid) from Wako Pure Chemical Industries, Ltd. of Osaka, Japan, or tertiary-butyl hydroperoxide. Tertiary-butyl hydroperoxide is presently the most preferred. At this time, the nitrogen purge to the reactor is stopped and the monomer mixture is slowly added to the reactor along with an accelerator solution. A preferred accelerator is an aqueous solution of the sodium salt of hydroxymethanesulfinic acid. Such a product is available from Henkel of America, Inc. It is also important to recognize that the monomer mixture should be separately stirred during its addition to the reactor to prevent the individual ingredients of the monomer mixture from separating.

Upon the addition of the monomer mixture, the temperature of the reactor is allowed to rise due to the exothermic polymerization reaction. The reaction temperature is preferably maintained at between about 45°C and 55°C, and most preferably between about 48°C and 53°C. Once the monomer mixture has been completely added, the addition of the accelerator solution is continued for another about 40 to 60 minutes.

In order to complete the reaction, as a final cook-off, an additional amount of initiator is added to the reactor after the monomer mixture has been completely added to the reactor. The addition of the accelerator solution continues during this cook-off period. After the accelerator solution has been added, the mixture is kept warm for an additional about 30 minutes to complete the reaction. The reactor is then cooled. When the reactor temperature has fallen to about 35°C, a small amount of biocide is added along with deionized.water to adjust the total solids content. At this time, the pH is also adjusted to within the range of 7.0 to 8.5 by the addition of a suitable base such as ammonia. For ease of handling, and also to simplify mixing, the polymer emulsion is preferably produced as an emulsion with about 35% solids by weight. The reaction products are then filtered to remove any grit.

In the preferred embodiment, rather than preparing the polymer- emulsion as the reaction product of a single monomer mixture, two separate monomer mixtures are provided with different properties. Preferably the second monomer mixture includes a lower concentration of ethylenically unsaturated carboxylic acid monomers than the first monomer mixture. According to this embodiment, the first monomer mixture is first added to the reactor and at least partially reacted. The second monomer mixture is then slowly introduced and reacted. By using such a procedure, a procedure referred to herein as a "sequential polymerization" procedure, and by carefully selecting the properties of the first and second monomer mixtures, the resulting emulsion can be produced with high solids content at relatively low viscosity. Such sequentially polymerized emulsions also produce coatings with improved properties such as faster dry times for ink jet printer papers and films coated with the polymer coating. In contrast, if a single feed is used, a higher viscosity generally results, making handling of the resulting emulsion somewhat more difficult. Ink jet printer papers and films coated with a polymer coating produced by a single feed polymerization reaction tend to have slower dry speeds. Without being bound by theory, applicant believes that the sequential polymerization procedure causes the polymer particles to form as a core of a first polymer formed by the reaction products of the first monomer mixture with a shell surrounding the core, the shell being formed by the reaction products of the second monomer mixture.

Once the polymer emulsion is prepared, it can then be applied to an appropriate substrate by known methods. Preferably, the a coating material is produced by diluting the polymer emulsion with an elastomeric material such as a rubber emulsion, most preferably a nitrile rubber latex. When.the polymer emulsion is to be used for coating a facestock for use as a coated facestock for printer applications, the polymer emulsion is preferably diluted with a nitrile rubber latex to a concentration of about 5% by weight on a solid basis. Most preferably, the nitrile rubber latex is provided as an aqueous emulsion at about 48% by weight solids. The preferred nitrile rubber latex is a carboxylated btitadiene-acrylonitrile rubber latex. One such carboxylated butadiene-acrylonitrile rubber latex is available from Synthomer Ltd. of Harlow, Great Britain under the trade name Synthomer 6000. In the preferred embodiment, the nitrile rubber latex is first diluted to a concentration of about 35% by weight solids arid then added to the polymer emulsion.

The polymer coating material is applied to a facestock at a preferred dry coat weight of at least about 10 grams per square meter (gsm). Preferably, less than about 50 gsm of coating material is provided. At coat weights of less than about 10 gsm, it can be difficult to obtain a uniform finish on the paper or film. Thinner coat weights will also result in papers and films that take longer to dry once printed. While coat weights greater than about 50 gsm are possible with good properties including good flexibility and extremely rapid drying properties, such coat weights can tend to be expensive, and therefore, are not generally preferred.

As already mentioned, the coating can be applied to any number of different facestocks including substrates such as paper, card stock, cardboard and vinyl, polyester, polyethylene and polypropylene films. An important benefit of the polymer coating of the present invention is that it adheres well to virtually any substrate. Consequently, the choice of substrates is not of critical importance in practicing the invention. Preferred coat weights for paper, card stock and cardboard are 18 to 24 gsm. Preferred coat weights for vinyl, polyester, polyethylene and polypropylene films are in the range of 20 to 30 gsm.

As stated, in the preferred embodiment, a facestock coated with the polymer of the present invention has high gloss characteristics. Such high gloss is achieved without any mechanical treatment methods such as those commonly employed in the production of prior art .high-gloss coatings. However, for some applications, a lower gloss finish may be desirable. In order to achieve a matte finish, up to about 20% by weight of particles, preferably inert particles such as silicate crystals having an average particle size of 5-10 microns, may be added to the coating before it is applied to the substrate. Of course, any degree of gloss between a dull, matte finish and a high gloss finish can be achieved by varying the amount of particles added.

While coat weights of at least 15 gsm are generally desired for photographic quality printer paper, it has surprisingly been discovered that at low coat weights in the range of about 10 to 18 gsm, a coated film produced from a conventional release liner coated with the polymer of the present invention has desirable image transfer properties results. Such an image transfer film is able to produce an image with high resolution. In order to transfer the image, the printed films is pressed against the substrate to which the image is to be transferred while the ink is still wet, allowed to dry, and the release liner is carefully peeled away. The image is transferred cleanly with a clean break between the printed image and the surrounding coating. Such a clean break is desirable in that the transferred image does not include a "shadow" of surrounding coating as typically results with image transfer products. Such results are also achieved without the need for supplemental adhesives as the printed image is inherently tacky when wet. Possible substrates to which such an image may be transferred include any facestock such as paper, card stock, cardboard, vinyl, polyester, polyethylene, polypropylene, and even substrates such as glass, ceramic and cloth.

If desired, an image may first be printed to an image transfer film and allowed to dry for later transfer to some other substrate. When it is desired to transfer the image, the image is first dampened with water such as by spraying the printed side of the transfer film and then the transfer film is pressed against the substrate as set forth above. One difference in using the transfer film in this way is that the film is also transferred to the substrate without the clean break achieved when the image is transferred immediately after printing. However, such a method is useful in producing a transfer film with remoistenable, water-activatable adhesive characteristics. Such characteristics can be useful for wallpaper, postage stamps, and a number of other different applications.

Yet another desirable property of the image transfer films of the present invention is that the transferred images, though not waterproof, are water resistant Once the image has been transferred to a substrate, the removal of the image requires both water and a mechanical shear force for removal. Therefore, such image transfer films can be useful in producing attractive container labels for jars and bottles of food and other products. Such labels will tend to adhere well to the container, but can easily be removed when desired.

As discussed, the polymer emulsion is also useful in producing a coating for rubber articles such as gloves. The same absorbency properties that make the polymer coating useful for making photographic quality printer paper also make the coating useful as a donning coating for items such as rubber examination gloves. The coating is additionally useful as a release coating for rubber articles made by molding techniques. Whether it is used as a.donning coating or release coating, the polymer coating of the present invention provides good anti-blocking properties, and the coated rubber articles are less likely to stick to themselves, or to each other when stacked.

When used as a coating for rubber articles, the polymer emulsion is preferably blended with an elastomeric material such as a rubber latex emulsion, most preferably a nitrile rubber latex. The preferred-nitrile rubber latex for coating rubber articles is a carboxylated butadiene-acrylonitrile latex product available under the trade name Synthomer 6000, as set forth above. While alone, the cured polymer tends to be fairly brittle, when blended with nitrile rubber latex, the elastic properties of the coating are greatly enhanced with elasticity of 1000% or higher. Furthermore, the inclusion of nitrile rubber latex imparts desirable water resistant properties to the coating, and results in a strong bond between the rubber article and the coating. This makes the coated rubber article less likely to crack after stretching.

In one preferred embodiment, in addition to being diluted with a nitrile rubber latex, the polymer emulsion is blended with an acrylate, silicone, styrene and urethane polymer emulsion. Such an emulsion polymer is disclosed in U.S. Patent Application No. 09/215,578, which is incorporated herein by reference. The inclusion of an acrylate, silicone, styrene and urethane polymer emulsion with the polymer coating of the present invention can greatly improve the elasticity of coatings made from the acrylate, silicone, styrene and urethane polymer emulsion alone.

When used as a release coating, the polymers of the present invention have the further desirable property of being able to tolerate high concentrations of the metal salts used as coagulants for the production of rubber articles. This simplifies the manufacturing steps in making rubber articles. In particular, a blend of a nitrile rubber emulsion and a polymer emulsion of the present invention can be combined with a coagulant such as calcium nitrate and used as a preliminary dipping emulsion to replace an emulsion of powder and coagulant such as is used in a conventional assembly line for the manufacture of rubber articles. Surprisingly, it has been discovered that the blending of the polymer emulsion of the present invention with nitrile rubber latex permits the nitrile rubber latex to tolerate high levels of coagulant without coagulating as would occur if the polymer emulsion of the present invention were not included. According to the invention, calcium nitrate levels as high as 35% can be tolerated at temperatures up to 60°C. For the preferred embodiments of the invention in which an ethoxylated (meth)acrylate monomer is included in the monomer mixture, calcium nitrate levels nearing the maximum solubility of calcium nitrate in water, about 43.5% at 60°C, can be tolerated. Such levels are useful for making thick rubber articles such as industrial gloves where high levels of coagulant are required.

In the preferred embodiment, a mold or former such as a glove former is dipped into such a blend to form a first coating on the former. This first coating is then permitted to briefly dry. Once it has dried, it is then dipped into a conventional rubber emulsion and allowed to set. The formed rubber article is then subjected to a leaching step to remove impurities. The rubber article is then dipped into a second blend of nitrile rubber latex and the coating polymers of the present invention and cured. Once cured, the article is stripped from the former, the former is cleaned and the process is repeated. It should be noted that while the first coating will not coagulate prematurely, during the cure step the coating coagulates and cures to provide a coating that is securely bonded to the rubber article.

Since rubber articles are generally turned inside out during the stripping step, the outer coating applied during production is often the inner surface of the finished article. For example, for gloves, the coating applied as the outer coating during manufacture will typically be the donning coating of the finished glove. For those articles that are turned inside out after formation, the first coating which initially serves as a release coating for the former, further acts as anti-block coating for the outer surface of the formed rubber article. The second coating in turn acts as the donning coating for the rubber article.

While the invention has been described with specific reference to its use in forming gloves by multiple dipping steps, the term "coated rubber article" is meant to include a rubber article with a coating adjacent at least one side of the rubber article regardless of how the rubber article was manufactured. Specifically, the term includes those articles in which a rubber article is first formed and then coated with the polymer coating as well as those articles for which the polymer coating is first formed and then the rubber article is molded over the polymer coating. Furthermore, while specific reference is made to nitrile rubber latex articles, the invention is also useful for producing coatings for other rubber articles such as natural rubber latex articles.

The invention will now be described with reference to the following examples.

### EXAMPLES 1, 2 AND 3

Three separate polymer emulsions were prepared as set forth in Examples 1, 2 and 3. For each, an initial reactor charge was prepared with deionized water, surfactants, a catalyst and a defoamer. A number of different surfactants were selected to ensure good mixing between the monomers. The specific surfactants used were AIRVOL 540, a polyvinyl alcohol. The AIRVOL 540 is provided as a solid and was diluted with water to a 5.4 weight % solution before addition to the reactor. Other surfactants included Surfynol 465 and Surfynol 485W, nonionic ethoxylated acetylenic surfactants with 65 weight % and 63.75 weight %, respectively, of active ingredients in water solutions. The AIRVOL and Surfynol surfactants are all available from Air Products and Chemicals, Inc. of Allentown, Pennsylvania. The reactor charge also included Disponil FES 77, a sodium lauryl ether sulfate surfactant provided as a 32.5 weight % aqueous solution of active ingredients that is available from Henkel of America, Inc.

In addition to the surfactants, the initial reactor charge for each of Examples 1, 2 and 3 further included the sodium salt of ethylenediaminetetraacetic acid, iron(III), or Fe-EDTA, which acts as an activator and oxygen scavenger. In order to control foaming, a small amount of the defoamer, Drewplus L-191, was also added. The amounts of each of the ingredients for the initial reactor charge for each of Examples 1, 2 and 3 are set forth in Table 1.

**Table 1: Initial Reactor Charge (in parts by weight)**

| INGREDIENT | Examples 1-3 |
|---|---|
| deionized water | 442.56 |
| AIRVOL 540 (5.4 wt % aqueous solution) | 151.60 |
| Surfynol 465 . | 6.30 |
| Surfynol 485 W | 6.30 |
| Disponil FES 77 | 20.70 |
| Fe-EDTA | 0.04 |
| tertiary butyl hydroperoxide | 2.50 |
| Drewplus L-191 | 0.05 |
| TOTAL | 630.05 |

In preparing the initial reactor charge for each of Examples 1, 2 and 3, all ingredients except the tertiary butyl hydroperoxide initiator and defoamer were first charged to a heated reactor. A high rpm mixer provided the agitation. The mixture in the reactor was purged with nitrogen to remove any dissolved oxygen and the defoamer was added.

An accelerator solution of the sodium salt of hydroxymethanesulfinic acid in water was then prepared according to Table 2. Identical accelerator solutions were used for each of Examples 1, 2 and 3. The preferred accelerator is provided by Henkel of North America.

**Table 2: Accelerator Solution (in pans by weight)**

| INGREDIENT | Examples 1-3 |
|---|---|
| Deionized water | 178.00 |
| Hydroxymethanesulfinic acid, sodium salt | 2.00 |
| TOTAL | 180.00 |

For each of Examples 1, 2 and 3, two different monomer mixtures were separately prepared as set forth in Table 3.

**Table 3: Monomer Mixtures (in parts by weight)**

| | Example 1 | | Example 2 | | Example 3 | |
|---|---|---|---|---|---|---|
| INGREDIENT | Mix 1 | Mix 2 | Mix 1 | Mix 2 | Mix 1 | Mix 2 |
| Butylacrylate | 47.30 | 75.00 | 46.10 | 72.40 | 46.10 | 72.40 |
| Methylacrylate | 30.70 | 48.40 | 30.70 | 48.40 | 30.70 | 48.40 |
| 2-hydroxyethylmethacrylate | 70.00 | 101.00 | 68.20 | 98.10 | 68.20 | 98.10 |
| Ethoxylated 2-hydroxyethylmethacrylate-15 | 0.00 | 0.00 | 5.70 | 9.30 | 0.00 | 0.00 |
| Ethoxylated 2-hydroxyethylmethacrylate-10 | 0.00 | 0.00 | 0.00 | 0.00 | 5.70 | 9.30 |
| N-vinylpyrrolidone | 27.50 | 3.2.60 | 25.10 | 29.30 | 25.10 | 29.30 |
| Methacrylic acid | 12.00 | 12.00 | 12.00 | 12.00 | 12.00 | 12.00 |
| acrylic acid | 12.00 | 12.00 | 12.00 | 12.00 | 12.00 | 12.00 |
| Methylmethacrylate | 25.10 | 39.20 | 25.10 | 39.20 | 25.10 | 39.20 |
| Trifluoroethyl-methacrylate | 3.00 | 4.50 | 2.70 | 4.00 | 2.70 | 4.00 |
| TOTAL | 227.60 | 324.70 | 227.60 | 324.70 | 227.60 | 324.70 |

For each of the Examples, the individual reactants of each of the two monomer mixtures were combined in separate stirred containers and were maintained under constant and vigorous agitation. The pH of each of the two monomer mixtures was measured and was about 3.3 for the first monomer mixture and about 4.5 for the second monomer mixture. A 16% ammonia solution was added to each monomer mixture to bring the pH up to between about 7.0 and 8.0 for each monomer mixture. An 80 weight % solution of dimethylaminoethyl acrylate, methyl chloride quaternary was then added to each monomer mixture as the quaternary amine (meth)acryiate. The particular quaternary amine (meth)acrylate used was Ageflex FA1Q80MC, available from CPS Chemical Company, Inc. of Old Bridge, New Jersey. Upon adding the Ageflex, the monomer mixtures appear slightly cloudy. Deionized water was then added to each monomer mixture uritil the solution became clear.

The same procedure was repeated for each of Examples 1, 2 and 3. The primary differences between the examples being the addition of ethoxylated (meth)acrylate monomer to the first and second monomer mixtures. For Example 1, no ethoxylated (meth)acrylate was added. For Example 2, each of the first and second monomer mixtures included an amount of an ethoxylated hydroxyethylmethacrylate with an average of 15 ethylene oxide units as the ethoxylated (meth)acrylate monomer. Such a product is available from Nippon Nyukazai Co., Ltd. of Tokyo, Japan as an 88% by weight solution with 12% by weight propyleneglycol monomethylether under the product designation MA-15OMF. For Example 3, each of the first and second monomer mixtures included an amount of an ethoxylated hydroxyethylmethacrylate with an average of 10 ethylene oxide units as the ethoxylated (meth)acrylate monomer. Such a product is available from Nippon Nyukazai Co., Ltd. of Tokyo, Japan under the product designation MA-100A.

The amount of each ingredient added to the two monomer mixtures of each of Examples 1, 2 and 3 is set forth in Table 4.

**Table 4: pH Adjustment of Monomer Mixtures (in parts by weight)**

| INGREDIENT | Examples 1-3 | |
|---|---|---|
| | Mix 1 | Mix 2 |
| Monomer Mixture | 227.60 | 324.70 |
| 16% ammonia solution | 25.40 | 28.30 |
| Ageflex FA1Q80MC (80% by weight) | 44.40 | 37.60 |
| Deionized water | 21.00 | 23.00 |
| TOTAL | 319.40 | 415.60 |

At this point, for Example 1, the nitrogen purge to the reactor was discontinued and the tertiary butyl hydroperoxide as set forth in Table 1 was added to the reactor. The accelerator solution was slowly introduced into the reactor along with the slow introduction of the first monomer mixture. The accelerator solution was fed into the reactor at a rate of 0.75 parts by weight per minute for four hours. The first monomer mixture was added to the reactor at 4.07 parts by weight per minute for 78 minutes. In order to prevent the first monomer mixture from separating, constant and vigorous agitation was maintained during the entire addition.

The first monomer mixture was allowed to react by an exothermic reaction. The reactor temperature was maintained between 48 and 53°C during the reaction. Constant agitation of the reactor was also maintained during the process. The reaction was allowed to proceed for fifteen minutes after the last of the first monomer solution had been charged to the reactor.

The second monomer mixture was then added to the reactor at a rate of 4.07 parts by weight per minute for 102 minutes. Again, constant agitation was maintained for both the monomer mixture being fed into the reactor and the reactants. The reaction temperature was maintained between 48 and 53°C during this period.

In order to encourage the complete reaction of the monomers, at twenty and forty minutes after the last of the second monomer mixture had been added, 0.4 parts by weight of a 70 weight % solution of tert butyl hydroperoxide was added to the reactor in a cook-off step for a total of 0.8 parts of the solution. The reactor temperature was maintained for an additional 30 minutes and then the batch was allowed to cool to 35 °C. Once the batch had cooled, in order to adjust the total solids content to 35 weight %, and to adjust the pH to between 7.5 and 8.0, deionized water and a 16% ammonia solution were added to the polymer coating emulsion. An additional amount of Drewplus L-191 was added as a defoamer, and Kathon LX was added as a biocide. Kathon LX is a biocide with 1.4 weight % active ingredients, available from Rohm & Haas of Philadelphia, Pennsylvania. The emulsion was then filtered through a 55-micron filter. The specific amounts of post reaction additives are set forth below in Table 5.

**Table 5: Post-Polymerization Rinse Solution and Additives (in parts by weight)**

| INGREDIENT | Examples 1-3 |
|---|---|
| 16% ammonia solution | 90.00 |
| tertiary butyl hydroperoxide (70% solution) | 0.80 |
| Drewplus L-191 | 0.10 |
| Kathon LX (1.5% solution) | 0.30 |
| Deionized water | 264.50 |
| TOTAL | 355.70 |

The identical procedures as set forth above were repeated for Examples 2 and 3. A Differential Scanning Calorimetry profile for the polymer of each of Examples 1-3 showed major glass transition temperature peaks occur at about 33°C with minor glass transition temperature peaks at 75°C and -13°C.

### EXAMPLE 4

An amount of the polymer emulsion of Example 2 was diluted with a nitrile rubber latex to form a coating material. The diluted emulsion contained 93.25 weight % polymer emulsion on a dry basis and 6.75 weight % of nitrile rubber latex on a dry basis. The nitrile rubber used was a carboxylated butadiene-acrylonitrile rubber known as Synthomer 6000, available from Synthomer Ltd. of Harlow, Great Britain. When mixing the polymer with the nitrile rubber latex, it is important that the polymer be slowly added under good agitation. The agitation was continued for 30 minutes to ensure good mixing.

A first portion of the coating was applied to a number of sheets of 60 pound super high gloss paper at a coat weight of 24 grams per square meter. A second portion was applied to a number of sheets of clear, cast vinyl film at a coat weight of 27 gsm. A third portion was applied to a number of sheets of silicone-coated paper of the type commonly used as a release liner for pressure sensitive adhesives at a coat weight of 16 gsm. The various coated facestocks were cured in an oven maintained between 80 and 90°C for about seven minutes. Each of the coated facestocks exhibited excellent clarity and gloss, the high gloss having been achieved without any further mechanical treatment. The gloss for each of the three types of facestock was measured according to ASTM test method D523-89 with a micro-gloss reflectometer of the type manufactured by BYK Gardner of Germany. Measurements were taken for the 75° reflectance, 60° reflectance and 20° reflectance. Five measurements were taken for each film at each of the three different reflectance angles and the results were averaged. The gloss measurements measured as percent reflectance are summarized as follows in Table 6 as follows:

**Table 6: Gloss Measurements for Ink Jet Printer Films**

| FILM | MICRO-GLOSS (% reflectance) | | |
|---|---|---|---|
| | at 75° angle | at 60° angle | at 20° angle |
| High Gloss Paper | 99.3 | 77.9 | 35.2 |
| | 100.2 | 76.7 | 29.0 |
| | 99.3 | 77.8 | 31.2 |
| | 98.0 | 76.0 | 30.3 |
| | 99.9 | 77.5 | 29.5 |
| | Average: 99.34 | Average: 77.18 | Average: 31.04 |
| Clear Vinyl | 100.9 | 83.1 | 54.4 |
| | 100.6 | 82.1 | 51.3 |
| | 100.0 | 81.0 | 46.4 |
| | 100.4 | 82.1 | 52.0 |
| | 99.3 | 80.8 | 50.6 |
| | Average: 100.24 | Average: 81.82 | Average: 50.94 |
| Release Liner | 96.9 | 64.0 | 21.0 |
| | 97.8 | 53.8 | 17.7 |
| | 97.0 | 64.9 | 19.8 |
| | 98.1 | 53.1 | 17.0 |
| | 98.2 | 61.2 | 18.1 |
| | Average: 97.60 | Average: 59.4 | Average: 18.72 |

Color images were then printed on the coated high gloss paper and the coated clear vinyl films using a Hewlett-Packard DeskJet 890C ink jet printer. For the high gloss paper, the printer was set for premium photo quality printing for paper. For the clear vinyl film, the printer was set for premium photo quality printing for transparencies. After printing, the coated facestocks still retained excellent gloss characteristics and displayed very high resolution with little cracking. For the paper film, the printed sheets were dry to the touch in three to five minutes. The clear vinyl films were dry to the touch in five to seven minutes. The films also exhibited good flexibility with neither the coating nor the image separating from the substrate or cracking.

Color images were then printed on the sheets of coated release liner, also using the Hewlett-Packard DeskJet 89C printer set for premium quality printing for transparencies. While still wet, the release liners were pressed against various substrates such as cardboard, vinyl, glass and ceramic. The release liners were allowed to dry for about five to seven minutes. For each, the release liner was peeled from the substrate. The printed images were cleanly transferred to the various substrates with virtually no defects and 100% transfer, with clean breaks around the images with little surplus coating adhering to the substrates. The printed images were crack free and adhered well to each of the various substrates.

### EXAMPLES 5, 6 and 7

For Example 5, an acrylate, silicone, styrene and urethane polymer emulsion was prepared as the sequentially polymerized reaction product of two different monomer mixture as set forth in Example 1 of U.S. Patent Application No. 09/215,578. The acrylate, silicone, styrene and urcthane polymer was provided as an aqueous emulsion with a solids content of 55 weight %. This Example was used as a comparative sample.

For Example 6, a first amount of the polymer emulsion of Example 2 was added to a nitrile rubber latex in the proportion of 20 weight % polymer coating on a dry basis to 80 weight % nitrile rubber (Synthomer 6000) on a dry basis. The polymer emulsion was added to the nitrile rubber latex under constant and vigorous agitation.

For Example 7, a second amount of the polymer emulsion of Example 2 and a portion of the acrylate, silicone, styrene and urethane polymer emulsion of Example 5 were added to a nitrile rubber latex (Synthomer 6000). The ingredients were combined in the amount of 16 weight % of the polymer emulsion of Example 2 on a dry basis, 20 weight % of the acrylate, silicone, styrene and urethane polymer emulsion on a dry basis and 64 weight % of nitrile rubber latex on a dry basis. As with Example 6, for Example 7 the polymer emulsion and acrylate, silicone, styrene and urethane polymer emulsion were added to the nitrile rubber latex under vigorous agitation.

For each of the Example 6 and 7 emulsions, the agitation was continued for 30 minutes to ensure good mixing. Each of these polymer emulsions of Examples 5, 6 and 7 was applied at a dry coat weight of 70 grams per square meter to a release liner of the type commonly used for pressure sensitive adhesives as set forth above. The coated release liners were dried at 70°C for ten minutes and cured at 120°C for ten minutes. The samples were cooled and a dumbbell shaped test sample film with a 5 mm by 20 mm test area was cut from each of the three release liner sheets. Stretch and strength tests were then performed on the three sample films according to ASTM test method D412-92. The test results are summarized in Table 7.

**Table 7: Mechanical Properties of Coatings**

| | MODULUS (psi) | | | ELONGATION AT BREAK (%) | TENSILE STRENGTH AT BREAK (psi) |
|---|---|---|---|---|---|
| | at 100% | At 300% | at 500% | | |
| Example 5 | 282 | 398 | -- | 428 | 552 |
| Example 6 | 125 | 142 | 179 | 2050 | 121 |
| Example 7 | 161 | 188 | 233 | 1363 | 234 |

From the results of this testing, it is apparent that coatings made from the coating polymer of the present invention (Example 6) have excellent stretch and strength characteristics. The present invention is also useful in modifying the physical properties of an acrylate, silicone, styrene and urethane polymer emulsion (Example 7) in order to improve both stretch and strength of the resulting coating compared to an acrylate, silicone, styrene and urethane polymer emulsion coating alone (comparative Example 5). It has been found that for coatings made from the coating polymers of the present invention, a percent elongation at break in the range of 1500 to 2000 or higher can be achieved. For coatings made from the coating polymers of the present invention blended with an acrylate, silicone, styrene and urethane polymer emulsion such as those disclosed in U.S. Patent Application No. 09/215,578, a percent elongation at break in the range of 1500 to 2000 or higher can be achieved. The coating of Example 6 is particularly useful as the outer coating for nitrile rubber latex gloves used in clean room environments in which the gloves must be both powder-free and silicon-free. For surgeon's gloves, the coating of Example 7 is preferred as an outer coating for a natural latex glove as such a coating provides a somewhat better tactile feel than a coating such as that of Example 6.

### EXAMPLES 8, 9, 10 and 11

For Examples 8 and 9, coated nitrile rubber latex gloves were formed with coating polymers of the present invention. For Example 8, a mold release/coagulant emulsion was formed using the polymer coating emulsion of Example 6 to which 33% by weight on a wet basis of calcium nitrate was added. For Example 9, a mold release/coagulant emulsion was formed using the polymer coating emulsion of Example 7 to which 33% by weight on a wet basis of calcium nitrate was added. These resulting emulsions were then individually applied to hand-shaped glove molds by dipping the glove molds into a container of each of the emulsion mixtures. Upon removal from the emulsion mixture, the glove molds were briefly dried. Each of the two coated glove molds was then dipped in compounded Synthomer 6000, a nitrile rubber latex, and was set by briefly heating each of the coated molds. Each coated mold was leached in water for about seven minutes. The coated glove mold of Example 8 was then dipped into a container of the polymer emulsion as set forth .in Example 7. The coated glove mold of Example 9 was then dipped into a container of the polymer emulsion of Example 5. Each of the two coated molds was then cured in an oven maintained between 120 and 140°C for twenty to thirty minutes. The formed gloves were then stripped from the molds by turning them inside out such that the outer coating applied during the production step became the donning coating.

For Examples 10 and 11, coated natural latex gloves were formed with coating polymers of the present invention. For Example 10, a mold release/coagulant emulsion was formed using the polymer coating emulsion of Example 6 to which 33% by weight on a wet basis of calcium nitrate was added. For Example 11, a mold release/coagulant emulsion was formed using the polymer coating emulsion of Example 7 to which 33% by weight on a wet basis of calcium nitrate was added. These resulting emulsions were then individually applied to hand-shaped glove molds by dipping the glove molds into a container of each of the emulsion mixtures. Upon removal.from the emulsion mixture, the glove molds were briefly dried. Each of the two coated glove molds was then dipped in compounded Vultax, a natural rubber latex available from General Latex and Chemical Corp. of Cambridge, Massachusetts, and was set by briefly heating each of the coated molds. Each coated mold was leached in water for about seven minutes. The coated glove mold of Example 10 was then dipped into a container of the polymer emulsion as set forth in Example 7. The coated glove mold of Example 11 was then dipped into a container of the polymer emulsion of Example 5. Each of the two coated molds was then cured in an oven maintained between 120 and 140°C for about fifteen to twenty minutes. The formed gloves were then stripped from the molds by turning them inside out such that the outer coating applied during the production step became the donning coating.

For each of Examples 8, 9, 10 and 11, the gloyes stripped cleanly and easily from the respective molds and only minor cleaning was required to prepare the molds for further glove forming. The finished gloves exhibited excellent strength and elasticity. After stretching, there was no visible flaking or cracking of the coatings. The coatings for the gloves were further examined microscopically and no cracks were detected.

It has further been discovered that desirable properties can be achieved when an acrylic copolymer, especially those used in forming pressure sensitive adhesives, is blended with an elastomeric material such as a rubber latex emulsion, especially nitrile rubber latex. For example, by blending an amount of nitrile rubber latex with an acrylic copolymer pressure sensitive adhesive of the type disclosed in U.S. Patent 5,895,801, the contents of which are incorporated by reference, and applying the blend to a suitable substrate, an adhesive construct with improved properties is formed. In particular, the adhesive of such a construct provides improved removability properties compared to the use of the same pressure sensitive adhesive when applied directly to a substrate without first blending it with a nitrile rubber latex. It is preferred that the acrylic copolymer be blended with about 5-50% by weight, on a dry basis, of nitrile rubber latex.

As one example, a pressure sensitive adhesive of the type disclosed in U.S. Patent 5.895,801 was blended with 15% by weight on a dry basis of nitrile rubber latex, and the blend was applied to a sheet of banner vinyl as a facestock with a silicone release liner. After one week of aging at 70°C, the blended adhesive showed significant improvement in retaining the adhesive properties when compared to a non-blended adhesive. It is believed that the inclusion of nitrile rubber latex with the adhesive prevents the migration of plasticizers from the facestock into the adhesive. Such migration can have adverse affects on the properties of an adhesive.

As a second example, a blend of the same adhesive and 50% by weight, on a dry basis, of nitrile rubber latex was applied to a sheet of banner vinyl as a facestock. The resulting construct was then applied to a number of substrates including paper, cardboard, glass, stainless steel, polypropylene and polyethelene. The blended adhesive showed improved removability from all substrates compared to an unblended adhesive

The invention has been described by exemplary and preferred embodiments, but is not to be so limited. Persons skilled in the art will appreciate that a variety of modifications may be made without departing from the scope of the invention, which is limited by the following claims.

## Claims

1. A method of labelling a surface comprising the steps of: preparing an adhesive image transfer assembly comprising at least one ink-absorbing image holding layer and a backing layer; printing on the ink-absorbing image holding layer with ink; activating the ink-absorbing image holding layer to a tacky state by rubbing the backing layer; adhering the ink-absorbing image holding layer to the surface: and removing the backing sheet from at least a portion of the ink-absorbing image holding layer after the ink-absorbing image holding layer has been adhered to the surface.

2. A method as defined in claim 1, wherein the transfer assembly is prepared such that a release layer is interposed in between a water repelling layer and the backing layer, and the water repelling layer is interposed in between the release layer and the ink-absorbing image holding layer.

3. A method as defined in any preceding claim, wherein the method further comprises the step of positioning the image transfer assembly onto the surface to be labelled.

4. A method as defined in claim 1, 2 or 3, wherein the surface to be labelled is the surface of an optical disc.

5. A method as defined in claim 4 when appended to claim 3, wherein the step of positioning the transfer assembly onto the surface comprises positioning the image transfer assembly onto a post of a label applicator device.

6. A method as defined in any preceding claim, wherein the method further comprises providing an outer surface of the ink-absorbing image holding layer with channels for air egress.

7. A method as defined in any preceding claim, wherein the ink-absorbing image holding layer constitutes means for holding an image printed with aqueous ink.

8. A method as defined by any preceding claim, wherein the step of removing the backing sheet from the ink-absorbing image holding layer after the ink-absorbing image holding layer has been adhered to the surface comprises removing the backing sheet from only a portion of the ink-absorbing image holding layer that has been activated to a tacky state, with the portion of the ink-absorbing image holding layer that has not been activated to a tacky state remaining on the backing sheet.

9. A method as defined by any preceding claim, wherein the step of printing an image onto the ink-retaining layer is performed with an ink jet printer.

10. A method as defined by claim 1, wherein the printing step is performed by hand by means of a pen.

11. A method defined by claim 4 or 5, wherein the step of preparing the adhesive image transfer assembly comprises preparing a disc label having a positioning portion and a generally circular portion having an ink-absorbing layer.

12. A method as defined by claim 11, wherein the generally circular portion of the disc label further comprises a water-repelling layer between the backing sheet and the ink-absorbing image holding layer.

13. A method as defined by claim 1, 4, 5, 11 or 12, wherein after the step of printing on the ink-absorbing image holding layer, the printed image is allowed to dry before placing in surface of the ink-absorbing image holding layer onto the surface of the disk.

14. A method as defined in any one of claims 1, 2 or 3 wherein the surface is a window and wherein the method is for reducing transmission of electromagnetic radiation through the window.

15. A method as defined in claim 14, wherein the method further comprises the step of cutting the image transfer assembly such that it may fit at least a portion of the window.

16. A method as defined in claim 14 or 15, wherein the step of adhering the ink-absorbing image holding layer to the window includes wetting the ink-absorbing image holding layer.

17. A method as defined in claim 14, 15 or 16, wherein the step of printing on the ink-absorbing image holding layer is carried out prior to the ink-absorbing image holding layer being adhered to the window.

18. An adhesive image transfer assembly for transferring an image to a surface, the assembly comprising: a backing sheet and an ink-absorbing image holding layer on the backing sheet that is not tacky when in an inactive state, wherein the ink-absorbing image holding layer is activatable to a tacky state by means of rubbing on the backing sheet.

19. An adhesive image transfer assembly as claimed in claim 18, wherein the ink-absorbing image holding layer comprises a film derived from an acrylic polymer emulsion.

20. An adhesive image transfer assembly as defined in claim 19, wherein the ink-absorbing image holding layer further comprises an additive that reduces surface tackiness of said polymer.

21. An adhesive image assembly as defined in claim 20, wherein said additive is a quaternary amine type of polymer.

22. An adhesive image transfer assembly as defined in any one of claims 18 to 21, wherein the surface of the ink-absorbing image holding layer is patterned to allow air egress as the ink-absorbing polymer image holding layer is adhered to the surface.

23. An adhesive image transfer assembly as defined in any one of claims 18 to 22, wherein the ink-absorbing image holding layer further comprises a pigment.

24. An adhesive image transfer assembly as defined in any one of claims 18 to 23, wherein the adhesive image assembly comprises a circular portion corresponding to the shape of an optical media disc and at least one tab immediately adjacent to the circular portion.

25. An adhesive image transfer assembly as defined in any one of claims 18 to 24, wherein the adhesive image assembly further comprises a water-repellent layer disposed between the backing sheet and the ink-absorbing image holding layer.

26. An adhesive image transfer assembly as defined in claim 25, wherein the water-repellent layer comprises a film derived from an acrylic-based emulsion.

27. An adhesive image transfer assembly as defined in any one of claims 18 to 26, wherein the adhesive image assembly further comprises a release layer on the backing layer, and a water-repellent layer between the release layer and the ink-absorbing image holding layer.

28. An adhesive image transfer assembly as defined in any one of claims 18 to 27, wherein the ink-absorbing image holding layer is also activatable to a tacky state when exposed to water.

## Patentansprüche

1. Verfahren zum Etikettieren einer Oberfläche, das folgende Schritte umfasst: Herstellen einer klebenden Bildtransferanordnung, umfassend eine Druckfarbe absorbierende Bildhalteschicht und eine Rückschicht; Drucken auf der Druckfarbe absorbierenden Bildhalteschicht mit Druckfarbe; Aktivieren der Druckfarbe absorbierenden Bildhalteschicht in einem klebrigen Zustand durch Reiben der Rückschicht; Kleben der Druckfarbe absorbierenden Bildhalteschicht auf die Oberfläche und Entfernen der Rückschicht von mindestens einem Teil der Druckfarbe absorbierenden Bildhalteschicht, nachdem die Druckfarbe absorbierende Bildhalteschicht auf die Oberfläche geklebt wurde.

2. Verfahren nach Anspruch 1, wobei die Transferanordnung derart hergestellt wird, dass eine Trennschicht zwischen eine wasserabweisende Schicht und die Rückschicht eingebracht wird und die wasserabweisende Schicht zwischen die Trennschicht und die Druckfarbe absorbierende Bildhalteschicht eingebracht wird.

3. Verfahren nach einem vorhergehenden Anspruch, wobei das Verfahren zudem den Schritt umfasst: Positionieren der Bildtransferanordnung auf der Oberfläche, die etikettiert werden soll.

4. Verfahren nach Anspruch 1, 2 oder 3, wobei die Oberfläche, die etikettiert werden soll, die Oberfläche einer optischen Disk ist.

5. Verfahren nach Anspruch 4 im Anschluss an Anspruch 3, wobei der Schritt Positionieren der Transferanordnung auf die Oberfläche das Positionieren der Bildtransferanordnung auf einen Pfosten einer Etikettiervorrichtung umfasst.

6. Verfahren nach einem vorhergehenden Anspruch, wobei das Verfahren zudem umfasst: Ausstatten einer Außenfläche der Druckfarbe absorbierenden Bildhalteschicht mit Kanälen für den Luftaustritt.

7. Verfahren nach einem vorhergehenden Anspruch, wobei die Druckfarbe absorbierende Bildhalteschicht eine Vorrichtung zum Halten eines mit wässriger Druckfarbe gedruckten Bildes darstellt.

8. Verfahren nach einem vorhergehenden Anspruch, wobei der Schritt Entfernen der Rückschicht von der Druckfarbe absorbierenden Bildhalteschicht nach dem Kleben der Druckfarbe absorbierenden Bildhalteschicht an die Oberfläche umfasst: Entfernen der Rückschicht von nur einem Teil der Druckfarbe absorbierenden Bildhalteschicht, der in einen klebrigen Zustand aktiviert wurde, wobei der nicht in einen klebrigen Zustand aktivierte Teil der Druckfarbe absorbierenden Bildhalteschicht auf der Rückschicht verbleibt.

9. Verfahren nach einem vorhergehenden Anspruch, wobei der Schritt Drucken eines Bildes auf die Druckfarbe zurückhaltende Schicht mit einem Tintenstrahldrucker erfolgt.

10. Verfahren nach Anspruch 1, wobei der Druckschritt per Hand mit einem Stift erfolgt.

11. Verfahren nach Anspruch 4 oder 5, wobei der Schritt Herstellen der klebenden Bildtransferanordnung umfasst: Herstellen eines Disk-Etiketts mit einem Positionierungsabschnitt und einem generell kreisförmigen Abschnitt, der über eine Druckfarbe absorbierende Schicht verfügt.

12. Verfahren nach Anspruch 11, wobei der generell kreisförmige Abschnitt des Disk-Etiketts zudem eine wasserabweisende Schicht zwischen der Rückschicht und der Druckfarbe absorbierenden Bildhalteschicht umfasst.

13. Verfahren nach Anspruch 1, 4, 5, 11 oder 12, wobei man nach dem Schritt Drucken auf der Druckfarbe absorbierenden Bildhalteschicht das gedruckte Bild trocknen lässt, bevor es auf der Oberfläche der Druckfarbe absorbierenden Bildhalteschicht auf die Oberfläche der Disk aufgebracht wird.

14. Verfahren nach einem der Ansprüche 1, 2 oder 3, wobei die Oberfläche ein Fenster ist und das Verfahren der Verringerung des Transfers von elektromagnetischer Strahlung durch das Fenster dient.

15. Verfahren nach Anspruch 14, wobei das Verfahren zudem den Schritt umfasst: Schneiden der Bildtransferanordnung derart, dass sie zu mindestens einem Teil des Fensters passt.

16. Verfahren nach Anspruch 14 oder 15, wobei der Schritt Kleben der Druckfarbe absorbierenden Bildhalteschicht auf das Fenster das Benetzen der Druckfarbe absorbierenden Bildhalteschicht umfasst.

17. Verfahren nach Anspruch 14, 15 oder 16, wobei der Schritt Drucken auf der Druckfarbe absorbierenden Bildhalteschicht vor dem Kleben der Druckfarbe absorbierenden Bildhalteschicht auf das Fenster erfolgt.

18. Klebende Bildtransferanordnung zum Überführen eines Bildes auf eine Oberfläche, umfassend: eine Rückschicht und eine Druckfarbe absorbierende Bildhalteschicht auf der Rückschicht, die im inaktiven Zustand nicht klebrig ist, wobei die Druckfarbe absorbierende Bildhalteschicht mittels Reiben der Rückschicht in einen klebrigen Zustand aktiviert werden kann.

19. Klebende Bildtransferanordnung nach Anspruch 18, wobei die Druckfarbe absorbierende Bildhalteschicht einen Film umfasst, der aus einer Acrylpolymer-Emulsion hervorgegangen ist.

20. Klebende Bildtransferanordnung nach Anspruch 19, wobei die Druckfarbe absorbierende Bildhalteschicht zudem ein Additiv umfasst, das die Oberflächenklebrigkeit des Polymers verringert.

21. Klebende Bildtransferanordnung nach Anspruch 20, wobei das Additiv ein Polymer des quartären Amintyps ist.

22. Klebende Bildtransferanordnung nach einem der Ansprüche 18 bis 21, wobei die Oberfläche der Druckfarbe absorbierenden Bildhalteschicht derart gestaltet ist, dass Luft austreten kann, wenn die Druckfarbe absorbierende Polymer-Bildhalteschicht an die Oberfläche geklebt wird.

23. Klebende Bildtransferanordnung nach einem der Ansprüche 18 bis 22, wobei die Druckfarbe absorbierende Bildhalteschicht zudem ein Pigment umfasst.

24. Klebende Bildtransferanordnung nach einem der Ansprüche 18 bis 23, wobei die klebende Bildanordnung einen kreisförmigen Abschnitt umfasst, der der Form einer optischen-Medium-Disk entspricht, und mindestens einen Reiter unmittelbar neben dem kreisförmigen Abschnitt.

25. Klebende Bildtransferanordnung nach einem der Ansprüche 18 bis 24, wobei die klebende Bildanordnung zudem eine wasserabweisende Schicht umfasst, die zwischen die Rückschicht und die Druckfarbe absorbierende Bildhalteschicht eingebracht wird.

26. Klebende Bildtransferanordnung nach Anspruch 25, wobei die wasserabweisende Schicht einen Film umfasst, der aus einer Emulsion auf Acrylbasis hervorgegangen ist.

27. Klebende Bildtransferanordnung nach einem der Ansprüche 18 bis 26, wobei die klebende Bildanordnung zudem eine Trennschicht auf der Rückschicht und eine wasserabweisende Schicht zwischen der Trennschicht und der Druckfarbe absorbierenden Bildhalteschicht umfasst.

28. Klebende Bildtransferanordnung nach einem der Ansprüche 18 bis 27, wobei die Druckfarbe absorbierende Bildhalteschicht zudem in einen klebrigen Zustand aktiviert werden kann, wenn sie Wasser ausgesetzt wird.

## Revendications

1. Procédé de mise en place d'étiquettes sur une surface comprenant les étapes consistant à : préparer un ensemble de transfert d'image adhésive comprenant au moins une couche de maintien d'image absorbant de l'encre et une couche de support ; imprimer sur la couche de maintien d'image absorbant de l'encre avec de l'encre ; activer la couche de maintien d'image absorbant de l'encre en la mettant dans un état collant en frottant la couche de support ; faire adhérer la couche de maintien d'image absorbant de l'encre sur la surface ; et retirer la feuille de support d'au moins une partie de la couche de maintien d'image absorbant de l'encre après que la couche de maintien d'image absorbant de l'encre a été collée sur la surface.

2. Procédé selon la revendication 1, dans lequel l'ensemble de transfert est préparé de telle manière qu'une couche anti-adhésive est intercalée entre une couche hydrofuge et la couche de support, et la couche hydrofuge est intercalée entre la couche anti-adhésive et la couche de maintien d'image absorbant de l'encre.

3. Procédé selon l'une quelconque des revendications précédentes, dans lequel le procédé comprend en outre l'étape consistant à positionner l'ensemble de transfert d'image sur la surface sur laquelle doivent être mises en place des étiquettes.

4. Procédé selon la revendication 1, 2 ou 3, dans lequel la surface devant recevoir une étiquette est la surface d'un disque optique.

5. Procédé selon la revendication 4 lorsqu'elle dépend de la revendication 3, dans lequel l'étape de positionnement de l'ensemble de transfert sur la surface comprend le positionnement de l'ensemble de transfert d'image sur un montant d'un dispositif applicateur d'étiquettes.

6. Procédé selon l'une quelconque des revendications précédentes, dans lequel le procédé comprend en outre l'étape consistant à pourvoir une surface extérieure de la couche de maintien d'image absorbant de l'encre de canaux pour évacuer l'air.

7. Procédé selon l'une quelconque des revendications précédentes, dans lequel la couche de maintien d'image absorbant de l'encre constitue un moyen pour maintenir une image imprimée avec une encre aqueuse.

8. Procédé selon l'une quelconque des revendications précédentes, dans lequel l'étape de retrait de la feuille de support de la couche de maintien d'image absorbant de l'encre après que la couche de maintien d'image absorbant de l'encre a été collée sur la surface comprend le fait de retirer la feuille de support seulement d'une partie de la couche de maintien d'image absorbant de l'encre qui a été activée en la mettant dans un état collant, la partie de la couche de maintien d'image absorbant de l'encre qui n'a pas été mise dans un état collant restant sur la feuille de support.

9. Procédé selon l'une quelconque des revendications précédentes, dans lequel l'étape d'impression d'une image sur la couche retenant l'encre est exécutée avec une imprimante à jet d'encre.

10. Procédé selon la revendication 1, dans lequel l'étape d'impression est exécutée à la main au moyen d'un stylo.

11. Procédé selon la revendication 4 ou 5, dans lequel l'étape de préparation de l'ensemble de transfert d'image adhésive comprend la préparation d'une étiquette de disque comportant une partie de positionnement et une partie généralement circulaire comportant une couche absorbant l'encre.

12. Procédé selon la revendication 11, dans lequel la partie généralement circulaire de l'étiquette de disque comprend en outre une couche hydrofuge entre la feuille de support et la couche de maintien d'image absorbant de l'encre.

13. Procédé selon la revendication 1, 4, 5, 11 ou 12, dans lequel, après l'étape d'impression sur la couche de maintien d'image absorbant de l'encre, on laisse sécher l'image imprimée avant de placer la surface de la couche de maintien d'image absorbant de l'encre sur la surface du disque.

14. Procédé selon l'une quelconque des revendications 1, 2 et 3, dans lequel la surface est une fenêtre et dans lequel le procédé sert à réduire la transmission de rayonnement électromagnétique à travers la fenêtre.

15. Procédé selon la revendication 14, dans lequel le procédé comprend en outre l'étape consistant à couper l'ensemble de transfert d'image pour qu'il puisse s'adapter au moins à une partie de la fenêtre.

16. Procédé selon la revendication 14 ou 15, dans lequel l'étape consistant à faire adhérer la couche de maintien d'image absorbant de l'encre sur la fenêtre inclut le mouillage de la couche de maintien d'image absorbant de l'encre.

17. Procédé selon la revendication 14, 15 ou 16, dans lequel l'étape d'impression sur la couche de maintien d'image absorbant de l'encre est exécutée avant de faire adhérer la couche de maintien d'image absorbant de l'encre sur la fenêtre.

18. Ensemble de transfert d'image adhésive pour transférer une image sur une surface, l'ensemble comprenant : une couche de support et une couche de maintien d'image absorbant de l'encre sur la feuille de support qui n'est pas collante lorsqu'elle est dans un état inactif, dans lequel la couche de maintien d'image absorbant de l'encre peut être activée en étant mise dans un état collant en frottant la couche de support.

19. Ensemble de transfert d'image adhésive selon la revendication 18, dans lequel la couche de maintien d'image absorbant de l'encre comprend un film obtenu à partir d'une émulsion de polymère polyacrylique.

20. Ensemble de transfert d'image adhésive selon la revendication 19, dans lequel la couche de maintien d'image absorbant de l'encre comprend en outre un additif qui réduit le poisseux de surface dudit polymère.

21. Ensemble de transfert d'image adhésive selon la revendication 20, dans lequel ledit additif est un dérivé de type ammonium quaternaire d'un polymère.

22. Ensemble de transfert d'image adhésive selon l'une quelconque des revendications 18 à 21, dans lequel la surface de la couche de maintien d'image absorbant de l'encre présente un motif pour permettre l'évacuation de l'air à mesure que l'on colle la couche de maintien d'image en polymère absorbant de l'encre sur la surface.

23. Ensemble de transfert d'image adhésive selon l'une quelconque des revendications 18 à 22, dans lequel la couche de maintien d'image absorbant de l'encre comprenant de plus un pigment.

24. Ensemble de transfert d'image adhésive selon l'une quelconque des revendications 18 à 23, dans lequel l'ensemble d'image adhésive comprend une partie circulaire correspondant à la forme d'un disque de support optique et d'au moins une patte immédiatement adjacente à la partie circulaire.

25. Ensemble de transfert d'image adhésive selon l'une quelconque des revendications 18 à 24 dans lequel l'ensemble d'image adhésive comprend en outre une couche hydrofuge placée entre la feuille de support et la couche de maintien d'image absorbant de l'encre.

26. Ensemble de transfert d'image adhésive selon la revendication 25, dans lequel la couche hydrofuge comprend un film obtenu à partir d'une émulsion à base d'acrylique.

27. Ensemble de transfert d'image adhésive selon l'une quelconque des revendications 18 à 26, dans lequel l'ensemble d'image adhésive comprend en outre une couche anti-adhésive sur la couche de support, et une couche hydrofuge entre la couche anti-adhésive et la couche de maintien d'image absorbant de l'encre.

28. Ensemble de transfert d'image adhésive selon l'une quelconque des revendications 18 à 27, dans lequel la couche de maintien d'image absorbant de l'encre peut aussi être activée en étant mise dans un état collant quand elle est exposée à l'eau.
